# EUROPEAN PATENT SPECIFICATION

(11) **EP 1 298 585 B1**
(45) Date of publication and mention of the grant of the patent: **14.11.2012**
(21) Application number: 02021792.3
(22) Date of filing: 26.09.2002
(51) Int. Cl.: G06T 1/00, G06T 5/00

(54) **Image processing method and apparatus**
Bildverarbeitungsverfahren und Gerät
Procédé et appareil de traitement d'images

(30) Priority: 27.09.2001 JP 2001298198
(43) Date of publication of application: 02.04.2003
(73) Proprietor: FUJIFILM Corporation, Minato-ku Tokyo (JP)
(72) Inventor: Katayama, Takeshi, c/o Fuji Photo Film Co., Ltd., Ashigarakami-gun, Kanagawa-ken (JP); Takemoto, Fumito, c/o Fuji Photo Film Co., Ltd., Ashigarakami-gun, Kanagawa-ken (JP); Seto, Satoshi, c/o Fuji Photo Film Co., Ltd., Ashigarakami-gun, Kanagawa-ken (JP)
(74) Representative: Klunker . Schmitt-Nilson . Hirsch

(56) References cited:
- EP-A- 1 094 407
- WO-A-02/32112
- JP-A- 2001 056 776
- US-B1- 6 256 059
- PING WAH WONG ET AL: "Image processing considerations for digital photography" COMPCON '97. PROCEEDINGS, IEEE SAN JOSE, CA, USA 23-26 FEB. 1997, LOS ALAMITOS, CA, USA,IEEE COMPUT. SOC, US, 23 February 1997 (1997-02-23), pages 280-285, XP010219550 ISBN: 0-8186-7804-6

## Description

### BACKGROUND OF THE INVENTION

### Field of the Invention

The present invention relates to an image processing method and an image processing apparatus according to the preamble of claims 1 and 10 respectively. The present invention also relates to a program embodied on a computer-readable recording medium that causes a computer to execute the image processing method.

### Description of the Related Art

In a digital still camera (hereinafter referred to as a digital camera), an image obtained by photography is recorded as digital image data in an internal memory built in to the digital camera or in a recording medium such as a memory card. Based on the digital image data recorded therein, the image can be reproduced by a printer or on a monitor. In the case where an image obtained by a digital camera is reproduced by a printer or on a monitor in the above manner, the image is expected to have as high a quality as a photograph generated from a negative film.

For this reason, various kinds of image processing methods have been proposed for carrying out image processing such as density correction processing, gradation conversion processing, color correction processing, and sharpness processing for reproduction of image data obtained by a digital camera on a monitor or by a printer. Such image processing methods are generally carried out by image processing software installed in a personal computer . A user copies image data from a recording medium for a digital camera in a predetermined folder in a hard disc of his/her personal computer, and starts the image processing software installed in the personal computer. By using a GUI (Graphical User Interface) of the image processing software, the user can select image data to be subjected to the image processing, and inputs various instructions for the image processing. The image processing software carries out the image processing according to the instructions, and processed image data are then obtained.

Meanwhile, users who possess digital cameras generally do not understand the necessity of quality improvement by such image processing described above, regarding image data obtained by digital cameras. On the contrary, users generally think that image data obtained by digital cameras are already in a state that enables reproduction of high-quality images. For such a user, starting image processing software and inputting instructions for various kinds of processing such as image data selection are troublesome when image data obtained by a digital camera are reproduced on a monitor or by a printer.

An image processing method and an image processing apparatus according to the preamble of claim 1 (or 3) and claim 10 (or claim 12) is known from JP 2001 056776 A. Specifically, in this prior art method and apparatus, when a high resolution image is copied into a corresponding folder, a low resolution image is generated, while the generating conditions are saved in a log file.

Ping Wah Wong et al: "Image processing considerations for digital photography" Compcon '97. Proceedings, IEEE San Jose, CA, USA 23-26 Feb. 1997, Los Alamitos, CA, USA, IEEE Comput. Soc, US, 23 February 1997 (1997-02-23), pages 280-285 discloses a pipeline image processing system comprising plural steps carried out in a digital camera as well as plural steps which are carried out in a host computer.

### SUMMARY OF THE INVENTION

The present invention has been conceived based on consideration of the above circumstances. An object of the present invention is therefore to carry out predetermined processing such as image processing on image data, without a troublesome operation.

An image processing method of the present invention comprises the steps of claim 1 or claim 3.

In other words, the image processing method of the present invention does not have a GUI, and carries out the predetermined processing automatically by detecting the input of image data to the predetermined folder. Therefore, the predetermined processing of the present invention is processing carried out by a so-called image processing daemon.

Detecting an input of image data to a predetermined folder refers to detection of copying or moving of image data recorded in a memory card for a digital camera in or to the predetermined folder (such as "My Pictures" folder in the Windows™ operating system) . In this case, either a start or completion of the copying or moving operation may be detected.

As the predetermined processing, examples include image processing such as enlargement/reduction processing, density correction processing, gradation conversion processing, color correction processing, and sharpness processing on the image data, or processing such as calculation of a parameter used for the image processing. It is preferable for the image processing to be carried out so as to enable reproduction of an image that is optimal for a device such as a monitor or a printer for reproducing processed image data. The predetermined processing is not necessarily limited to image processing, and other kinds of processing may be included, such as moving the image data to a predetermined folder or a server connected to a network, placing a print order with a network photograph service system that receives orders for printing image data on a network, and generating image data of multiple resolutions, for example.

During the time the predetermined processing is being carried out, an icon or a logo representing the predetermined processing is preferably displayed. Alternatively, a sound may be generated, for example.

In the image processing method of the present invention, in the case where the image data are input to the predetermined folder in the form of a plurality of image data sets, the predetermined processing further comprises the steps of:
extracting a similar subject image data group from the plurality of image data sets; and
calculating the image processing parameter used commonly for the similar subject image data group.

The similar subject image data group may be a group of image data sets whose times of photography are in proximity, a group of image data sets obtained by photography at almost the same locations and/or in almost the same directions of photography, or a group of image data sets attached with information representing serial photography in the case of image data sets obtained by a digital camera having a function of serial photography. Information representing the time of photography, the location, the direction, and serial photography may be attached to tag information or header information of each of the image data sets.

In the image processing method of the present invention, in the case where the plurality of image data sets are input to the predetermined folder, the predetermined processing further comprises the steps of:
extracting a bracket photography image data group from the plurality of image data sets; and
setting a fixed image processing parameter as the image processing parameter for the bracket photography image data group, instead of calculating the image processing parameter for the bracket photography image data group.

The bracket photography refers to photographing the same subject while changing exposure, saturation, and/or contrast in a stepwise manner. Whether or not the image data sets have been obtained by bracket photography can be judged by tag information or header information attached to each of the image data sets.

In the image processing method of the present invention, processing for attaching the image processing parameter to the image data may further be carried out as the predetermined processing.

Furthermore, in the image processing method of the present invention, processing for generating processed image data by carrying out the image processing on the image data according to the image processing parameter may also be carried out as the predetermined processing.

In the case where the image processing is carried out, the image data before the image processing may be kept in or deleted from the predetermined folder.

In the image processing method of the present invention, processing for displaying the processed image data together with the image data may also be carried out as the predetermined processing.

In the image processing method of the present invention, processing comprising the step of receiving an input of correction instruction for the processed image data and newly calculating the image processing parameter according to the correction instruction may also be carried out as the predetermined processing.

In the image processing method of the present invention, whether or not the image processing has been carried out on the image data may also be judged. In this case, the predetermined processing is carried out only on the image data on which the image processing has not been carried out.

In the image processing method of the present invention, whether or not the image data are protected from alteration by copyright information may also be judged. In this case, the predetermined processing is carried out only on the image data other than the image data whose alteration is prohibited by the copyright information.

An image processing apparatus of the present invention comprises the features of claim 10 or claim 12.

In the image processing apparatus of the present invention, in the case where the image data are input to the predetermined folder in the form of a plurality of image data sets, the processing means further carries out processing comprising the steps of extracting a similar subject image data group from the plurality of image data sets and calculating the image processing parameter used commonly for the similar subject image data group, as the predetermined processing.

In the case where the plurality of image data sets are input to the predetermined folder, the processing means of the image processing apparatus of the present invention further carries out processing comprising the steps of extracting a bracket photography image data group from the plurality of image data sets and setting a fixed image processing parameter as the image processing parameter for the bracket photography image data group instead of calculating the image processing parameter for the bracket photography image data group, as the predetermined processing.

In the image processing apparatus of the present invention, the processing means may further carry out processing comprising the step of attaching the image processing parameter to the image data, as the predetermined processing.

Furthermore, the processing means may further carry out processing comprising the step of generating processed image data by carrying out the image processing on the image data according to the image processing parameter, as the predetermined processing.

The processing means of the image processing apparatus may further carry out processing comprising the step of displaying the processed image data together with the image data, as the predetermined processing.

The processing means may also carry out processing further comprising the steps of receiving an input of correction instruction for the processed image data and newly calculating the image processing parameter based on the correction instruction, as the predetermined processing.

Furthermore, the processing means may further carry out processing comprising the step of judging whether or not the image processing has been carried out on the image data, as the predetermined processing. In this case, the processing means carries out the processing of calculating the image processing parameter only for the image data on which the image processing has not been carried out.

Moreover, the processing means of the image processing apparatus of the present invention may further carry out processing comprising the step of judging whether or not the image data are protected from alteration by copyright information, as the predetermined processing. In this case, the processing means carries out the processing of calculating the image processing parameter on the image data excluding the image data whose alteration is prohibited by the copyright information.

The image processing method of the present invention may be provided as a program embodied in a computer-readable recording medium that causes a computer to execute the image processing method.

According to the present invention, an input of image data to the predetermined folder by copying, moving, or the like is detected and the predetermined processing related to the folder is carried out on the image data in the background of the operating system.

Therefore, the predetermined processing is carried out automatically if a user copies or moves image data recorded in a recording medium for a digital camera in or to the predetermined folder in a hard disc of his/her personal computer. As a result, the user is not required to start software nor to input an instruction in order to carry out the predetermined processing. In this manner, the predetermined processing can be carried out easily.

In the case where the predetermined processing is calculation of an image processing parameter used for image processing on the image data, the user is not required to start software nor to input an instruction for the image processing in order to calculate the image processing parameter. Therefore, the image processing parameter can be calculated easily.

Moreover, in the case where a plurality of image data sets are input to the predetermined folder, if a similar subject image data group is extracted therefrom and if an image processing parameter used commonly for the group is calculated, the image processing parameter does not need to be calculated for each of the image data sets in the group, since the image processing parameter is almost the same for similar subjects . In this manner, the time necessary for calculating the image processing parameter can be shortened.

In the case where a plurality of image data sets are input to the predetermined folder, if a bracket photography image data group is extracted from the image data sets and if a fixed image processing parameter is set as the image processing parameter for the bracket photography image data group instead of calculating the image processing parameter, the fixed image processing parameter does not cancel an effect of changing exposure or the like adopted in the bracket photography. If the image processing is carried out on the bracket photography image data group according to the fixed image processing parameter, processed image data sets enabling reproduction of images that reflect the effect of changing exposure or the like by the bracket photography can be obtained.

Moreover, if the image processing parameter is attached to the image data, the image processing can be carried out easily on the image data according to the image processing parameter attached to the image data, while storing the image data that have not been subjected to the image processing.

If the processed image data are generated by carrying out the image processing on the image data according to the image processing parameter, an effect of the image processing can be recognized immediately.

In this case, if the processed image data are displayed together with the image data that have not been subjected to the image processing, the effect of the image processing can be understood at a glance.

In this case, if an input of correction instruction for the processed image data is received and if the image processing parameter is calculated newly based on the correction instruction, the image processing parameter can be obtained that enables the image processing to reflect an intension of a user. Therefore, by carrying out the image processing on the image data according to the newly-calculated image process ing parameter, the processed image data enabling reproduction of an image reflecting the intension of the user can be obtained.

In the case where the processing for calculating the image processing parameter is further carried out regarding the image data that have been subjected to the image processing, the image data may have a degraded quality if the image processing is again carried out on the image data according to the calculated parameter. Therefore, whether or not the image processing has been carried out is judged and the predetermined processing is carried out only on the image data not having been subjected to the image processing. In this manner, quality degradation of the processed image data can be prevented.

Some image data may be protected from alteration of colors and tones by being copyrighted. Therefore, by judging whether or not the image data are protected from alteration by copyright information, and by carrying out the predetermined processing only on the image data whose alteration is not prohibited by the copyright information, the copyright of the image data can be prevented from infringement.

### BRIEF DESCRIPTION OF THE DRAWINGS

Figure 1 is a block diagram showing a configuration of an image processing apparatus as an embodiment of the present invention;
Figure 2 is a flow chart showing the operation of the embodiment;
Figure 3 is a block diagram showing a flow of image processing parameter calculation procedure;
Figure 4 shows a state wherein an icon is displayed in a task tray of Windows™ operating system;
Figure 5 shows a state wherein a menu of image processing daemon is displayed;
Figure 6 shows an example of overall display window;
Figure 7 shows an example of a manual set-up window;
Figure 8 shows an example of an evaluation window;
Figure 9 is a flow chart showing a procedure of extracting a similar subject image data group;
Figure 10 is a diagram for explaining the procedure of extracting the similar subject image data group;
Figure 11 is a diagram for explaining a procedure for determining how to deal with processed image data;
Figure 12 shows a description in a file for generating image data of different sizes;
Figure 13 is a diagram showing how the image data of different sizes are stored (part 1); and
Figure 14 is a diagram showing how the image data of different sizes are stored (part 2).

### DESCRIPTION OF THE PREFERRED EMBODIMENT

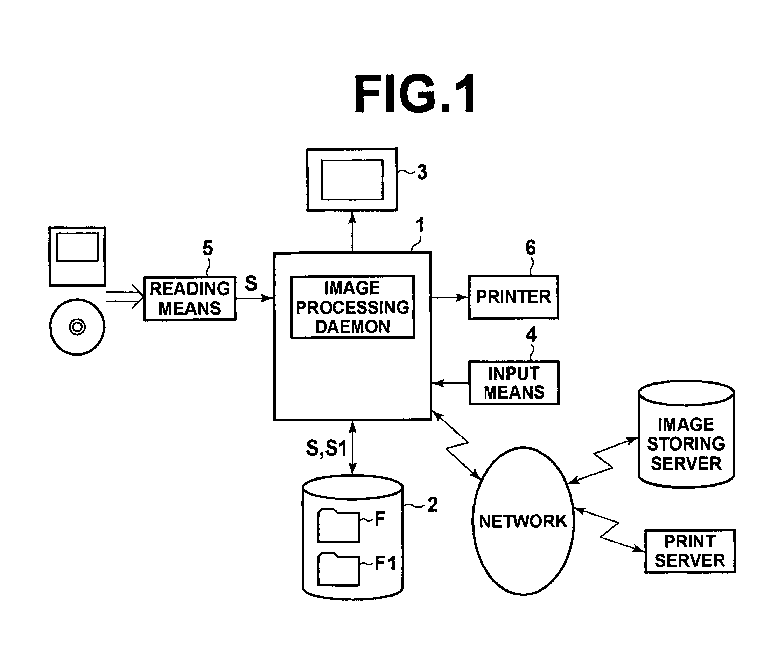

Hereinafter, an embodiment of the present invention will be explained with reference to the accompanying drawings. Figure 1 is a block diagram showing a configuration of an image processing apparatus of the embodiment of the present invention. The image processing apparatus of the present invention carries out processing on image data in the background of the operating system, by using an image processing daemon installed in a personal computer 1.

The personal computer 1 comprises a hard disc 2, a monitor 3, input means 4 comprising a mouse and a keyboard, reading means 5 such as a CD-ROM drive and a PC card slot for reading image data S from a recording medium for a digital camera (such as a Smart Media™ and a Compact Flash™), and a printer 6 for printing the image data S.

The image processing daemon carries out the processing on the image data S in the background of the operating system when the image processing daemon detects an input of the image data S to a predetermined folder F by copying or moving. An initial setting of the image processing daemon will be explained first.

In an initial setting window of the image processing daemon, the folder F to which the image data S are input is related to the processing to be carried out on the image data S. In the case where the folder F has not been generated, the folder F is newly created. The processing may be set so as to be carried out only on the image data S representing an image or images satisfying a predetermined condition, such as an image of people.

More specifically, the initial setting is determined in the initial setting window, regarding calculation of image processing parameters P used for image processing on the image data S, whether or not processed image data S1 are obtained by carrying out the image processing on the image data S according to the calculated image processing parameters P, whether the processed image data S1 are printed or displayed, whether or not the image data S before the image processing are stored in the case of carrying out the image processing, where the processed image data S1 are stored, and whether or not the image processing parameters P are attached to the image data S without carrying out the image processing on the image data S according to the calculated image processing parameters P. The initial setting is determined with use of GUI of the image processing daemon. In this embodiment, the image processing parameters P are calculated and the image processing is carried out on the image data S according to the image processing parameters P in order to output the processed image data S1 by the printer and on the monitor. The processed image data S1 are stored in a folder F1 that is different from the folder F. The processing described above is related to the folder F, and the image data S before the image processing are stored in the folder F.

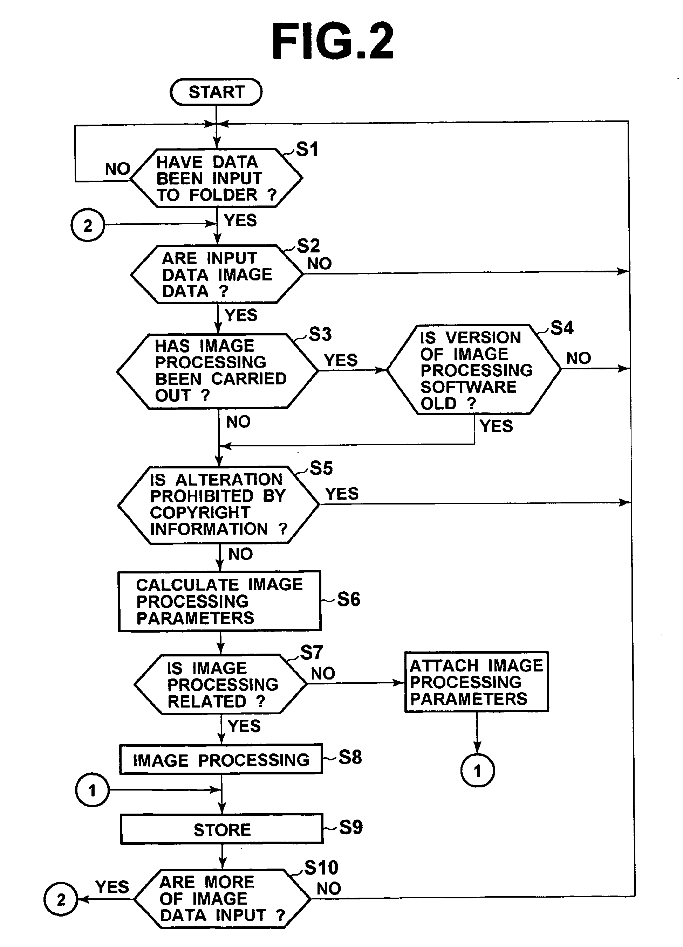

The operation of this embodiment will be explained next. Figure 2 is a flow chart showing the operation of this embodiment. In this embodiment, the image data S are sequentially input to the folder F in the form of a plurality of data sets (hereinafter referred to as the image data sets S). Whether or not any data are input to the folder F is judged first (Step S1). More specifically, whether or not an instruction has been input is judged for copying or moving the image data sets S from a memory card in or to the folder F by using the reading means 5. Alternatively, the judgment at Step S1 may be carried out by detecting completion of copying or moving operation regarding the image data sets S.

Whether or not the data input in the folder F are image data is then judged (Step S2). More specifically, this judgment is made with reference to the first byte of the file of each of the image data sets S. In the case of an Exif format file used for image data obtained by a digital camera, the first byte of the file is "4D, 3D, 00, 2A", while the first byte of a JPEG format file is "FF, D8, FF, E1". Therefore, by judging whether the first byte is either "4D, 3D, 00, 2A" or "FF, D8, FF, E1" whether or not the data input to the folder F are image data can be judged. In the case of bit map data, the file format is described in the property area of the file. Therefore, by referring to the property area of the data file, whether or not the input data are bit map data can be judged.

If a result at Step S2 is negative, the data input to the folder F are not image data. Therefore, the image processing parameters P are not calculated. Consequently, the procedure returns to Step S1. If the result at Step S2 is affirmative, whether or not the image processing has already been carried out on the image data sets S is judged (Step S3). The image data sets S obtained by the digital camera cannot have been subjected to the image processing by the image processing daemon. However, in the case where a user obtains the processed image data sets S1 having been subjected to the image processing by the image processing daemon from his/her friend or in the case where such processed image data sets S1 are stored in an image storing server, the processed image data sets S1 may be input to the personal computer 1 of the user. Therefore, in this embodiment, the judgment at Step S3 is made in consideration of such cases.

In the case where the image data sets S are of Exif file format, information indicating whether or not the image processing has been carried out thereon is described in tag information of the file. In the case of a JPEG format file, the information is described in header information of the file. Therefore, by referring to the tag information or the header information of the file, whether or not the image data sets S have been subjected to the image processing can be judged. In the case of bit map data, information indicating the fact that each of the image data sets S has been subjected to the image processing can be embedded in the each of the image data sets S as an electronic watermark. By detecting the electronic watermark and thus by detecting the information indicating the fact in this case, whether or not the image data sets S have been subjected to the image processing can also be judged. In the case of bit map data, if the information indicating whether or not the image processing has been carried out is described in the property area of each of the files, whether or not the image data sets S have been subjected to the image processing can also be judged by referring to the property area.

In the case where image processing has already been carried out on each of the image data sets S, the processed image data sets S1 may have a degraded image quality if the image processing is carried out thereon according to the calculated image processing parameters P. For this reason, whether or not the image data sets have been subjected to the image processing is judged first and calculation of the image processing parameters P and the image processing according to the parameters P are carried out only on the image data sets S that have not been subjected to image processing. In this manner, the processed image data sets S can be prevented from quality degradation.

If the image data sets S have been subjected to the image processing, a result at Step S3 becomes affirmative. In this case, whether or not the version of the image processing daemon that carried out the image processing is older than the version of the image processing daemon in this embodiment is judged (Step S4). The version of the image processing daemon in this embodiment is easily upgraded, since the image processing daemon is provided in the form of software. By upgrading the software, the performance of the image processing is also improved.

Therefore, the processed image data sets S1 can reproduce higher quality images if the image processing is carried out by the image processing daemon of the newer version in the case where the version of the image processing daemon that carried out the image processing on the image data sets S is judged at Step S4 to be older than the version of the image processing daemon installed in the personal computer 1. For this reason, the version of the image processing daemon that carried out the image processing on the image data sets S is judged at Step S4, and the image processing daemon in this embodiment carries out the image processing again if a result at Step S4 is affirmative. Therefore, if the result at Step S4 is affirmative, the procedure goes to the following step. If the result is negative, the procedure returns to Step S1.

At the following Step S5, whether or not the image data sets S are protected from alteration by density correction processing, gradation conversion processing and/or color correction processing is judged, with reference to copyright information. In the case of an Exif format file, the copyright information is described in the tag information while the copyright information is described in the header information in the case of a JPEG format file. For bit map data, the copyright information is embedded in each of the image data sets S as an electronic watermark. It is preferable for the copyright information to be encrypted for protection from alteration. In the case where the electronic watermark is encrypted, the copyright information is detected by decryption and whether or not alteration is prohibited is then judged by the copyright information. If a result at Step S5 is affirmative, the procedure returns to Step S1.

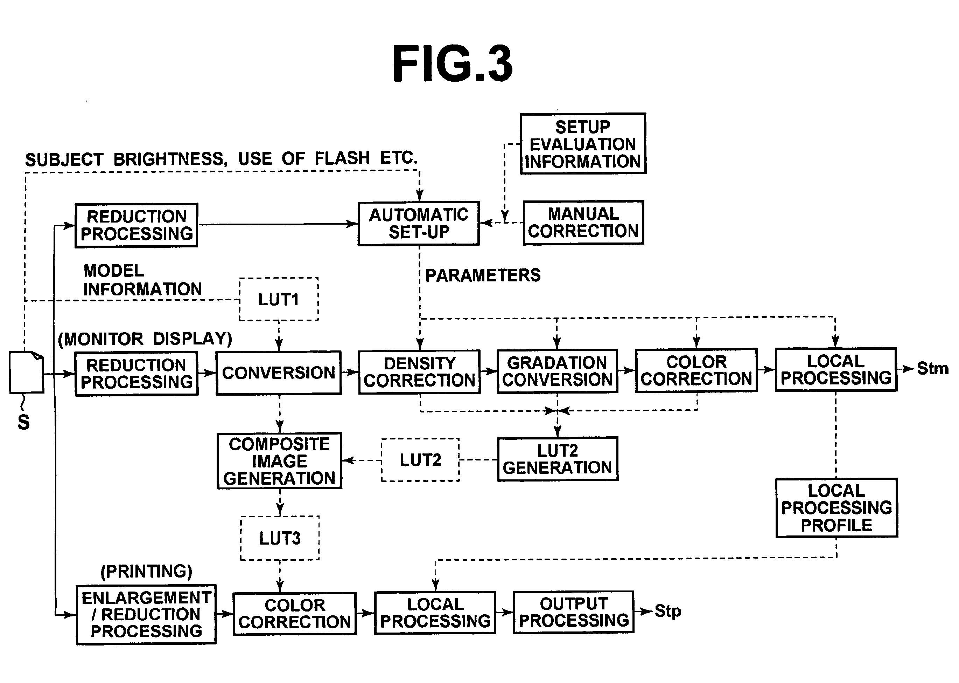

If the result at Step S5 is negative, the image processing parameters P are calculated (Step S6) . Figure 3 is a block diagram showing a flow of procedure of calculating the image processing parameters P. In this embodiment, the image data sets S are of Exif format and have been decompressed.

In this embodiment, the image processing parameters P are calculated by an automatic set-up, as parameters for carrying out density correction processing, gradation conversion processing, color correction processing, sharpness processing, local processing, and the like on the image data sets S. Reduction processing is carried out first on the image data sets S, in order to reduce the amount of calculation, and the image data sets S are analyzed by the automatic set-up, based on information attached to the tag information of the image data sets S, such as subject brightness information, or information regarding use/non-use of flash, for example. The parameters P are calculated as one-dimensional look-up tables for the density correction and the gradation conversion, as a 3X3 matrix for the color correction and as a local processing profile as the local processing.

Meanwhile, each digital camera has a reproduction image quality that varies in accordance with the model thereof. Therefore, in the case where the image processing is carried out on the image data sets obtained by the digital camera according to the parameters calculated by the automatic set-up, the quality of reproduced images changes in accordance with the model of the digital camera. Therefore, in this embodiment, the image processing is carried out on the image data sets S according to a three-dimensional look-up table (hereinafter referred to as an LUT1) for canceling a tone characteristic and a color characteristic of the digital camera that generated the image data sets S. In this manner, the image data sets S in a standard color space that does not change the reproduced image quality regardless of the digital camera model are obtained first. The LUT1 is generated for each model of digital camera and managed by the image processing daemon. Alternatively, a one-dimensional look-up table for gradation conversion and a 3 × 3 matrix for color correction may be used, instead of the LUT1.

The image data sets S obtained by the digital camera are according to ITU-R BT.709 (REC.709), and have the tone characteristic and the color characteristic depending on the model of the digital camera, as has been described above. By correcting the image data sets S according to the LUT1, the image data sets S become in accordance with BT.709, and do not have the characteristics caused by the model.

In this embodiment, the one-dimensional look-up tables for density correction and gradation conversion, the 3×3 matrix for color correction, the local processing profile for carrying out local processing, and the LUT1 are calculated as the parameters P according to the automatic set-up. Alternatively, a three-dimensional look-up table (hereinafter referred to as an LUT2) may be generated from the one-dimensional look-up tables for density correction and gradation conversion and the 3×3 matrix for color correction, to be used as the image processing parameters P. Furthermore, an LUT3 combining the LUT1 and LUT2 may be generated and used as the image processing parameters P. Alternatively, a profile according to ICC may be used as the image processing parameters P. Since a look-up table causes less bit deficiency at the time of image processing on image data, the processed image data sets S1 of higher image quality can be generated faster, with use of the look-up table.

The image data sets S having been subjected to the image processing according to the image processing parameters P become sRGB image data in the standard color space.

In Figure 2, whether or not the image processing on the image data sets S according to the calculated image processing parameters P is related to the folder F is judged (Step S7) after the image processing parameters P are calculated. In this embodiment, the folder F is related to the processing for carrying out the image processing on the image data sets S according to the image processing parameters P. Therefore, a result at Step S7 is affirmative. If the result at Step S7 is affirmative, the image processing is carried out on the image data sets S according to the image processing parameters P (Step S8). In this embodiment, since the processing for generating the processed image data sets for display on the monitor and for printing (hereinafter denoted as S1m and S1p, respectively) is related to the folder F, the processed image data sets S1m and S1p are also generated.

The image processing for display on the monitor will be explained next. First, reduction processing is carried out on the image data sets S so that the image data sets can represent images of a size appropriate for display on the monitor. The reduction processing reduces the size of the images to the VGA size (640 × 480 pixels) . The image data sets S are then converted according to the LUT1 so that the characteristics caused by the model of the digital camera are canceled. The image data sets S are then subjected to the density correction processing and the gradation conversion processing according to the one-dimensional look-up tables. The color correction processing according to the 3 × 3 matrix is further carried out thereon, followed by the local processing by the local processing profile. In this manner, the processed image data sets S1m for monitor display are obtained.

The density correction processing, the gradation conversion processing, and the color correction processing may be carried out at the same time according to the LUT2. Alternatively, the processing may be carried out at once according to the LUT3, for the camera model characteristic cancellation, the density correction, the gradation conversion, and the color correction.

Meanwhile, the image processing for printing starts with enlargement/reduction processing on the image data sets S for changing the size of the images represented by the image data sets S into a print size. Furthermore, the image data sets S after the enlargement/reduction processing are subjected to the cancellation of the camera model characteristics, the density correction processing, the gradation conversion processing, and the color correction processing according to the LUT3. Thereafter, the local processing is carried out thereon according to the local processing profile. Instead of the LUT3, the LUT1 and the LUT2 may be used. Alternatively, the LUT1, the one-dimensional look-up table for density correction, the one-dimensional look-up table for gradation conversion, and the 3 × 3 matrix for color correction may be used, instead of the LUT3. The image data sets S after the above-described processing are then converted into a color space that is appropriate for the printer 6 as an output device, and the processed image data sets S S1p for printing are then obtained.

The processed image data sets S1m and S1p (hereinafter collectively referred to as the processed image data sets S1) are stored in the folder F1 (Step S9). Whether or not more of the image data sets S are input is then judged (Step S10). If a result at Step S10 is affirmative, the procedure returns to Step S2. If the result at Step S10 is negative, the procedure returns to Step S1.

In this embodiment, the image data sets S are stored in the folder F. However, processing for deleting the image data sets S from the folder F may also be related to the folder F. In this case, processing for storing the processed image data sets S1 in the folder F, instead of the folder F1, may be related to the folder F.

In this embodiment, the folder F is related to the processing for obtaining the processed image data sets S1 by carrying out the image processing on the image data sets S according to the image processing parameters P. However, the folder F may only be related to the processing for calculating the image processing parameters P and for attaching the calculated image processing parameters P to the image data sets S. In this case, the result at Step S7 becomes negative, and the image processing parameters P are attached to the image data sets S (Step S11). The image data sets S attached with the image processing parameters P are then stored in the folder F1. The image data sets S attached with the image processing parameters P may be stored in the folder F, instead of the folder F1.

The image processing parameters P can be attached to the image data sets S by being described in the tag information of the image data sets S. Alternatively, a file having the image processing parameters P described therein may be generated in the folder F or F1 while being related to each of the image data sets S, for example. The name of the file that stores the image processing parameters P therein comprises the same file name as the corresponding image data set S but has a different extension. In the case where ID of each of the image data sets S is described in the tag information by the digital camera that obtained the image data sets S, the ID may be used for the file name of the image processing parameters P.

In the case where the image processing parameters P are attached to the image data sets S and the user wishes to display the processed image data sets S1 on the monitor 3, the image processing is carried out on the image data sets S according to the image processing parameters P after the processed image data sets S1 to be displayed are selected. Therefore, the display is time-consuming. For this reason, it is preferable for the processed image data sets S1m for monitor display to be generated in advance according to the image processing parameters P.

As has been described above, in this embodiment, if the user only inputs the image data sets S recorded in the recording medium for the digital camera or the like to the folder F generated in the personal computer of the user, the image processing daemon is started and carries out the calculation of the image processing parameters P and the image processing according to the image processing parameters P in the background of the operating system. Therefore, the use does not need either to start image processing software for calculating the image processing parameters P or to input an instruction for the image processing. In this manner, the calculation of the image processing parameters P and the image processing are carried out easily.

The image processing daemon does not have GUI, and operates in the background of the operating system. Therefore, the user may turn off the personal computer 1 during the operation of the image processing daemon. In order to prevent erroneous power cut, it is preferable for an icon or a logo to be displayed on the monitor 3 for indicating the operation of the image processing daemon. In this case, the icon or the logo may be displayed in motion on the monitor 3, such as moving, rotation, changing colors, or blinking so that the operation of the image processing daemon can be indicated clearly.

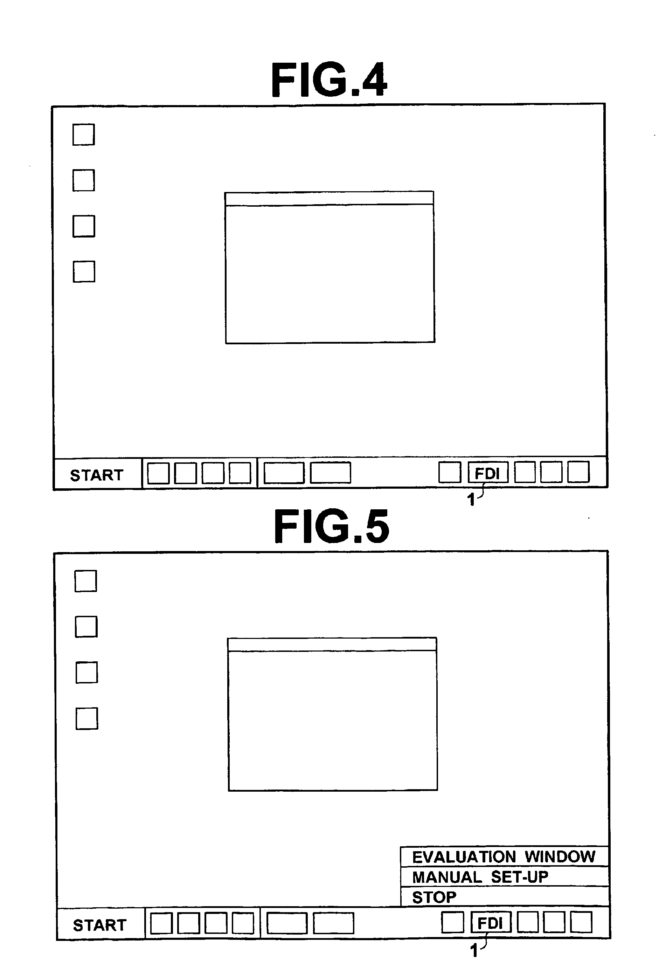

Furthermore, as shown in Figure 4, the icon or the logo (hereinafter referred to as an icon I) may be displayed in the task tray of Windows operating system 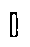 . In this case, it is also preferable for the icon I to be displayed in motion, such as rotation, changing colors, or blinking so that the operation of the image processing daemon can be clearly indicated.

Instead of the icon I, an alarm may sound in a small volume in every 10 seconds . Alternatively, background music or the like may be played.

In the case where the user wishes to turn off the personal computer 1 during the operation of the image processing daemon, the operation of the image processing daemon may be stopped by the user. For example, by clicking the icon I shown on the monitor 3, a menu of the image processing daemon may be displayed, as shown in Figure 5. The user can stop the operation of the image processing daemon by selecting Stop from the menu. In this case, the image processing daemon stores in the hard disc 2 the image data sets S that have not been processed completely (including the image data set S which was being processed). Meanwhile, in the case where the personal computer 1 is turned off without stopping the operation of the image processing daemon, the image processing daemon automatically stores the image data sets S which have not been processed completely. When the personal computer 1 is restarted, the image processing daemon calculates the image processing parameters P for the image data sets S which have not been processed completely, if the hard disc 2 stores the image data sets S.

The file of each of the image data sets S obtained by the digital camera is often named to include a serial number starting with 1, such as "Dsc00001.jpg". In the case where photography is carried out by the digital camera with use of a newly-formatted recording medium due to a flat battery or the like, the image data sets S to be recorded newly in the recording medium have the file names including the serial numbers starting with 1. For this reason, the file names conflict when the image data sets S are input from the recording medium to the folder F in the personal computer 1 and when the processed image data sets S1 generated from the image data sets S that were input from the recording medium are stored in the folder F1.

In order to prevent this situation from occurring, the image processing daemon detects copying or moving of the image data sets S from the recording medium, and converts the file names of the image data sets S to file names managed by the image processing daemon. For example, the image processing daemon uses serial numbers it manages. The image processing daemon manages the numbers in a permanent storage area such as a registry, a file, or a database.

Meanwhile, when the image data sets S are deleted from the folder F, the file names do not conflict. However, if the file names for the image data sets S before the processing are used for the processed image data sets S1, the file names conflict at the time the processed image data sets S1 are stored in the folder F1. In this case, the image processing daemon can avoid the conflict by using the serial numbers it manages for the file names of the processed image data sets S1 when the image processing daemon generates the processed image data sets S1. The image processing daemon also manages the numbers in the permanent storage area such as a registry, a file, or a database.

The image data sets S obtained by the digital camera are compressed at a predetermined compression ratio. Since the user can set the compression ratio as desired by using the digital camera, the image data sets S to be input to the folder F have various compression ratios. The image processing daemon decompresses the image data sets S upon carrying out the image processing thereon, and compresses the processed image data sets S1 after the image processing. At this time, the processed image data sets S1 are compressed at the same compression ratios as the image data sets S. However, in the case where the file size thereof needs to be decreased or in the case where the file size is larger than a predetermined size, the processed image data sets S1 may be compressed at a higher compression ratio. The user can set the compression ratio in the initial setting window of the image processing daemon.

In this embodiment, the processed image data sets S1m for monitor display are obtained, and the image data sets S before the processing are stored in the folder F. Therefore, the images can be compared before and after the image processing, and the image processing parameters P can be adjusted manually. Hereinafter, comparison of the images before and after the image processing and manual adjustment of the image processing parameters will be explained. The user displays a manual set-up window after the image processing is carried out by the image processing daemon. As shown in Figure 5, the manual set-up window can be displayed by selecting "Manual Set-up" in the menu shown by clicking the icon I displayed on the monitor 3. By selecting "Manual Set-Up", an overall display window is shown first.

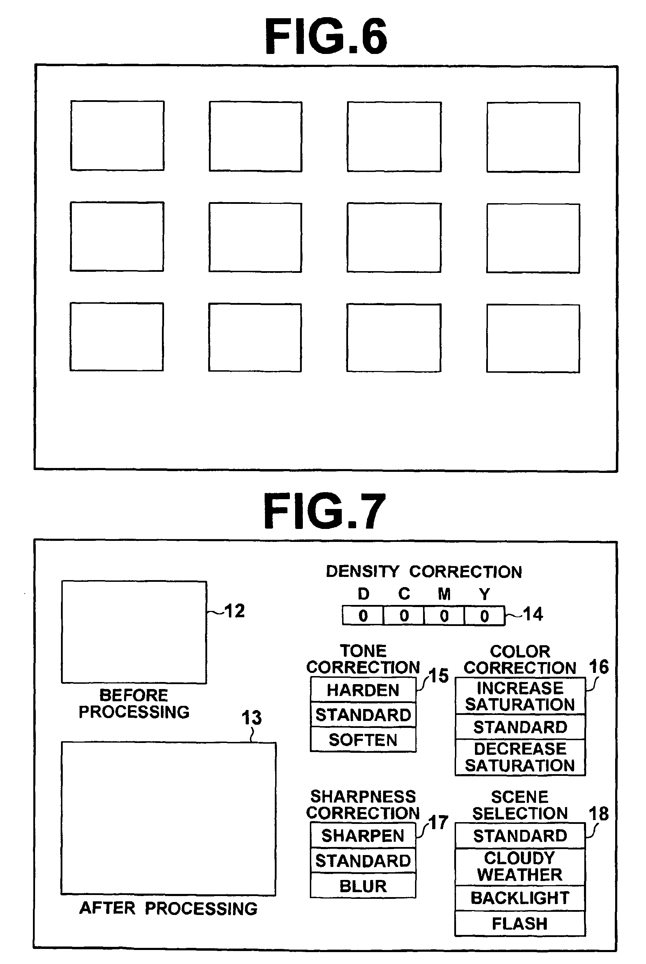

Figure 6 shows an example of the overall display window. As shown in Figure 6, thumbnail images 10 of the image data sets S input to the folder F are displayed in the overall display window. The thumbnail images 10 may be thumbnail images of the processed image data sets S1 stored in the folder F1. The user clicks a desired one of the thumbnail images 10 and the manual set-up window is displayed.

Figure 7 shows an example of the manual set-up window. Regarding the image selected in the overall display window, in the manual set-up window are shown an image 12 before the image processing (that is, the image represented by the image data set S), an image 13 after the image processing (that is, the image represented by the processed image data set S1), DCMY keys 14 for density correction, tone correction buttons 15, color correction buttons 16, sharpness correction buttons 17, and scene selection buttons 18.

The tone correction buttons 15 comprise a "Harden" button, a "Standard" button, and a "Soften" button. The color correction buttons 16 comprise an "Increase Saturation" button, a "Standard" button, and a "Decrease Saturation" button. The sharpness correction button 17 comprises a "Sharpen" button, a "Standard" button, and a "Blur" button. The scene selection buttons 18 comprises a "Standard" button, a "Cloudy Weather" button, a "Backlight" button, and a "Flash" button.

The user can reproduce the image after the processing in the VGA size, by clicking the image 13. If image data sets for the VGA size are generated in advance regarding the image data sets S before the processing, the user can also display the image before the processing in the VGA size by clicking the image 12.

The user compares the images 12 and 13 before and after the processing, and can understand at a glance how much the image quality has been improved by the image processing daemon. By inputting values in the DCMY keys 14, the image processing parameters P for density correction can be changed. By clicking any one of the tone correction buttons 15 or by clicking any one of the color correction buttons 16, the parameters P for gradation conversion or color correction can also be changed. Furthermore, by clicking any one of the sharpness correction buttons 17, the parameters P for sharpness can be changed. By clicking any one of the scene selection buttons 18, the image processing parameters P appropriate for the selected scene can be calculated.

By inputting an instruction for parameter change in the above manner, the image processing parameters P are calculated again, and the image processing is also carried out again on the image data set S according to the image processing parameters P to generate the processed image data set S1. The image 13 after the processing is then changed to the image represented by the processed image data set S1 that has been generated in the above manner. In this manner, the user can obtain the processed image data set S1 that reflect his/her intension.

The manual set-up described above can be carried out in the case where the folder F is related to processing for attaching the image processing parameters P to the image data sets S, without generating the processed image data sets S1. In this case, when the manual set-up window is displayed, the image processing is carried out on the image data set S that has been selected, according to the image processing parameters P attached to the selected image data set S . The image 13 after the image processing is then displayed. In the case where the image processing parameters P have been changed, the image processing parameters P that have been changed are attached to the image data set S.

The images 12 and 13 before and after the manual set-up may be displayed not only in the manner shown by Figure 7 but also in the manner where the images 12 and 13 are displayed in parallel or diagonally, for example. Alternatively, the images 12 and 13 may be displayed in separate windows. Furthermore, the image 13 may be displayed after the image 12 is displayed. In this case, the image 13 after the image processing may be displayed gradually or may appear gradually from the center thereof.

In this embodiment, the processed image data sets S1m for monitor display are obtained and the image data sets S before the processing are stored in the folder F. Therefore, the automatic set-up can be evaluated by comparison of the images before and after the processing. Hereinafter, how the automatic set-up is evaluated will be explained. The user displays an evaluation window after completion of the image processing by the image processing daemon. The user can display the evaluation window by selecting an "Evaluation Window" item in the menu displayed by clicking the icon I on the monitor 3, and.

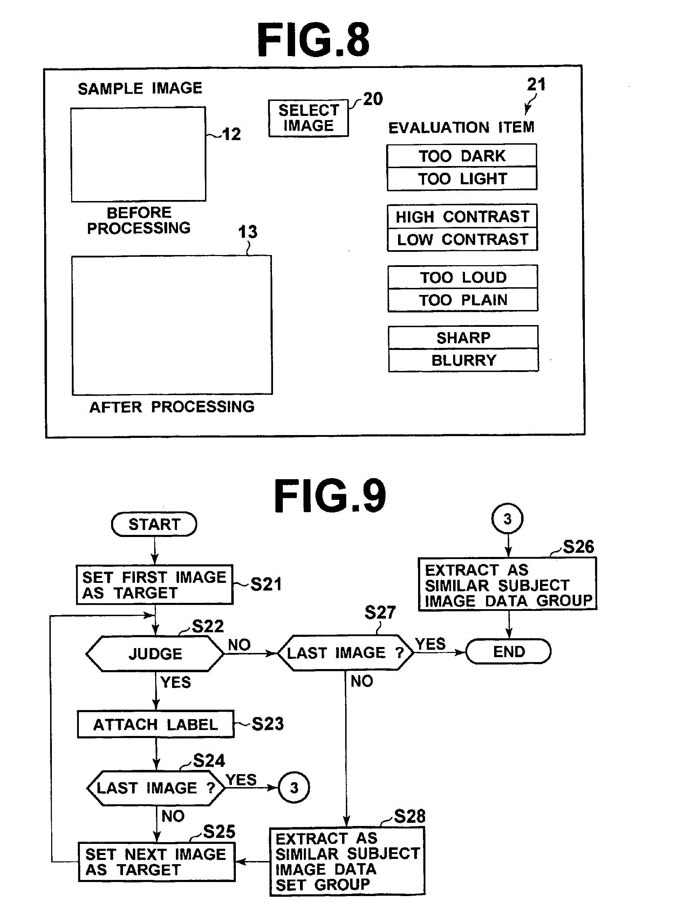

Figure 8 shows an example of the evaluation window. In the evaluation window are shown the images 12 and 13 before and after the processing, a Select Image button 20 for selecting one of the images to be displayed (hereinafter referred to as a sample image), and Evaluation Item buttons 21 for inputting an evaluation.

The Evaluation Item buttons 21 comprise a "Too Dark" button, a "Too Light" button, a "High Contrast" button, and a "Low Contrast" button, a "Too Loud" button, a "Too Plain" button, a "Sharp" button, and a "Blurry" button.

When the user clicks the Select Image button 20, a dialog box appears for selecting the sample image. The dialog box may be displayed regarding either the folder F or the folder F1. The user selects the sample image, and the images 12 and 13 before and after the processing are then shown, regarding the selected sample image. At this stage, the user can reproduce the processed image data set in the VGA size regarding the sample image, by clicking the image 13. If the image data sets for the VGA size regarding the image data sets S are generated in advance, the image before the image processing can also be displayed in the VGA size by clicking the image 12.

The user compares the images 12 and 13 with each other, and can understand how the image quality has been changed by the image processing daemon. The user can then input the evaluation of the automatic set-up regarding the sample image by clicking any one of the Evaluation Item buttons 21. In this manner, the image processing parameters P can be changed. For example, by clicking the button "Too Dark" or "Too Light", the image processing parameters P for density correction can be changed. By clicking the "High Contrast" button or the "Low Contrast" button, the image processing parameters P for gradation conversion can be changed. The image processing parameters P for color correction can also be changed by clicking the "Too Loud" button or the "Too Plain" button, and the image processing parameters P for sharpness can be changed by clicking the "Sharp" button or the "Blurry" button.

By a parameter change instruction input the in the above manner, the image processing parameters P are calculated again, and the image processing is carried out on the image data sets S again according to the image processing parameters P. In this manner, the processed image data sets S1 are newly generated and the image 13 is represented by the newly generated processed image data set S1, regarding the selected sample image. In this manner, the evaluation result can be reflected in the processed image data sets S1. If the image processing daemon is set to reflect the evaluation result in the image processing parameters P to be calculated according to the automatic set-up, the processed image data sets S reflecting the evaluation result can be obtained regarding the image data sets S input to the folder F.

In the above embodiment, the image processing parameters P calculated according to the automatic set-up become almost the same for the image data sets representing similar subjects. Therefore, in terms of operation time reduction, it is preferable for the image processing parameters P to be calculated for the image data sets S representing similar subjects (hereinafter referred to as a similar subject image data group), instead of calculating the image processing parameters P separately for each of the image data sets S. The similar subject image data group refers to a group of image data sets obtained by photography at almost the same times, in almost the same locations and/or directions, or a group of image data sets attached with information indicating serial photography (hereinafter referred to as serial photography information) obtained by a digital camera having a function of serial photography, for example. The times, the locations, the directions and the serial information can be known by referring to the tag information, since the information of the above kinds is included in the tag information.

The information regarding the location and the direction is attached to each of the image data sets S as information of latitude, longitude, and direction, by a GPS function of the digital camera. In the case of serial photography, a flag indicating serial photography becomes ON in the tag information.

As a method of extracting the similar subject image data group, whether or not the times of photography is separated within 10 seconds, or whether or not differences in latitude and longitude are within 10 seconds, and/or whether or not a difference in the photography directions is within 10 seconds may be judged between the image data sets immediately adjacent to each other in chronological order. In the case where a result of the judgment is affirmative, the image data sets adjacent to each other can be judged to be included in the same similar subject image data group.

Furthermore, whether or not the times of photography are separated within 10 seconds and whether or not the flag showing serial photography is ON at the same may be judged regarding the image data sets S arranged in the chronological order. If a result is affirmative, the image data sets S having the neighboring times of photography are judged to be included in the same group.

Moreover, a similarity between the images represented by the image data sets S may be judged so that the image data sets S having the similarity can be extracted as the same similar subject image data group. Since images photographed serially are highly likely to have the same subject or similar subjects, the group can be extracted easily based on the similarity if the file names of the image data sets S are in the chronological order of photography.

The similar image data group or groups can be extracted by applying the above method to the image data sets S arranged in the chronological order, starting from the image data set S having the oldest time of photography to the image data set S having the latest time of photography. Figure 9 is a flow chart showing the procedure of extracting the similar subject image data group or groups. The image data set S having the oldest time of photography is set as a target of judgment (Step S21) and the judgment described above is made regarding the target image data set S and the image data set S having the immediately adjacent time of photography (Step S22). If a result is affirmative, the two image data sets are attached with a label (Step S23), and whether or not the image data set S having the neighboring time of photography is the image data set photographed last is then judged (Step S24). If a result at Step S24 is negative, the image data set having the neighboring time of photography is set as the target (Step S25), and the procedure returns to Step S22.

If the result at Step S24 is affirmative, the image data sets that have been attached with the label are extracted as the similar subject image data group or groups (Step S26) to end the procedure.

If the result at Step S22 is negative, whether or not the image data set arranged next to the target image data set in the chronological order is the image data set photographed last is then judged (Step S27). If a result at Step S27 is negative, the image data sets attached with the label are included in the same similar subject image data group (Step S28), and the procedure returns to Step S25. If the result at Step S27 is affirmative, the procedure ends.

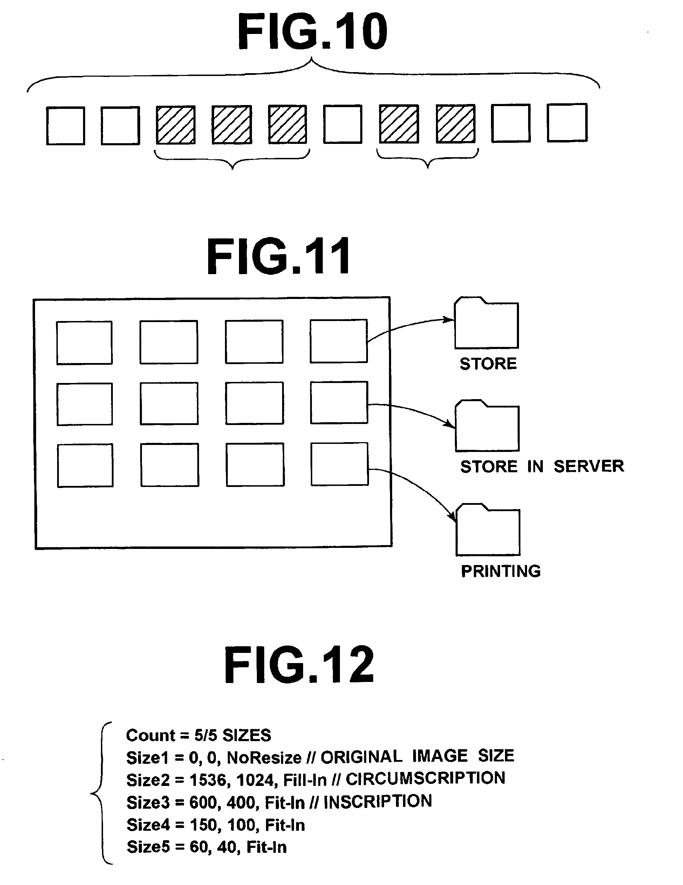

In this manner, the similar subject image data group is extracted from the image data sets S stored in the folder F. For example, if the number of the image data sets S stored in the folder F is 10, some of the image data sets S (2 similar subject image data groups, in this case) are extracted from the 10 image data sets S, as shown by hatched image data sets in Figure 10. In the case of extraction of the similar subject image data group in the above manner, the image processing by the image processing daemon is carried out after all the image data sets S have been input to the folder F.

Regarding the similar subject image data group or groups extracted in the above manner, a composite image data set is generated from the image data sets S included in the group or in each of the groups, at the time of calculating the image processing parameters P. The image processing parameters P are calculated by the automatic set-up, regarding the composite image data set, and used as the image processing parameters P for the respective image data sets S in the group or in each of the groups.

As has been described above, by calculating the image processing parameters P used commonly among the image data sets S in the similar subject image data group, the image processing parameters P do not need to be calculated for each of the image data sets S in the case where almost the same image processing parameters P are calculated. In this manner, the time necessary for calculation of the image processing parameters P can be shortened.

In the above embodiment, in the case where the image data sets S have been obtained by bracket photography (hereinafter the image data sets are collectively referred to as a bracket image data group), it is preferable for the image processing to be carried out on the bracket photograph image data group according to fixed image processing parameters found in advance therefor, rather than carrying out the image processing according to the image processing parameters P calculated according to the automatic set-up for each of the image data sets in the group.

Bracket photography refers to photographing the same subject while changing exposure, saturation, and/or contrast in a stepwise manner. By carrying out bracket photography, images having exposure, saturation, and/or contrast that change in the stepwise manner can be obtained. The user can select one of the images having the exposure, saturation and/or contrast he/she prefers, from the images of bracket photography.

However, in the case where the image processing is carried out on the image data sets S according to the image processing parameters P calculated by the automatic set-up, the processed image data sets S1 result in having almost the same densities, tones, and colors, since the image processing parameters P calculated by the automatic set-up are parameters to be used for conversion into densities, tones and colors that are common for the image data sets. For this reason, an effect of bracket photography is not reflected in the processed image data sets S1 generated according to the image processing parameters P calculated by the automatic set-up, although the exposure, the saturation, and/or the contrast were changed in the stepwise manner in bracket photography.

Therefore, by carrying out the image processing according to the fixed image processing parameters on the bracket photography image data group, instead of using the image processing parameters P calculated by the automatic set-up, the processed image data sets S1 enabling reproduction of images reflecting the effect of the changing exposure and the like of bracket photography can be obtained.

The image data sets S in the bracket photography image data group have information indicating the bracket photography in the tag information thereof. More specifically, a flag is set ON for the bracket photography information in the tag information. Based on the bracket photography information in the tag information, whether or not the bracket photography flag is ON and whether or not an interval of photography is within 10 seconds are then judged for the image data sets S arranged in chronological order. If a result of judgment is affirmative, the image data sets S having the neighboring photography times are judged to be included in the same bracket photography image data group.

In the above embodiment, the image processing parameters P are calculated by the automatic set-up for the image data sets S input to the folder F. Therefore, the processed image data sets S1 having a substantially uniform finish can be obtained by carrying out the image processing on the image data sets S according to the image processing parameters P that are calculated by the automatic set-up. Furthermore, by the manual set-up described above, an intension of the user can be reflected in the quality of the images after the image processing. However, since image quality adjustment requires experience, it is difficult for a general user to adjust the image quality by using the DCMY keys 14 or the like. Furthermore, in order to carry out the manual set-up, the image quality needs to be adjusted while the processed images are displayed one by one. Therefore, image quality adjustment is time-consuming. Moreover, since the image processing daemon does not have GUI, the quality of the processed images cannot be set during the image processing.

For this reason, the automatic set-up may be determined at the time of initial setting of the image processing daemon so as to reflect the intension of the user, regarding the folder F to which the image data sets S are input. For example, in the initial setting window of the image processing daemon, folders to which the automatic set-up for obtaining the processed image data sets S1 that are comparatively light or sharp, or folders to which the automatic set-up for backlight or flash use may be generated in advance and the image data sets S are input to the corresponding folders. In this manner, the user can obtain the processed image data sets S1 having the image quality intended by the user, only by inputting the image data sets S in a desired one of the folders to which the automatic set-up therefor is related.

In the above embodiment, the processing for storing the processed image data sets S1 in the folder F1 is related to the folder F. However, a keyword for classification may be given to each of the processed image data sets S1. In this case, processing for storing each of the processed image data sets S1 in a folder generated in advance according to the keyword is related to the folder F.

Furthermore, processing for printing the processed image data sets S1 by the printer 6 may be related to the folder F.

The processed image data sets S1 may be stored in an image storing server connected to the personal computer 1 via a network, in addition to the folder such as the folder F1 in the personal computer 1. In this case, in the initial setting window of the image processing daemon, processing for logging onto the image storing server and for inputting an ID and a password therefor is related to the folder F to which the image data sets S are input. Furthermore, a storage category is set for the processed image data sets S1 in the image storing server. The storage category refers to a category for classifying the processed image data sets S1 in accordance with an intension of the user, and classification according to the names of family members or classification such as a hobby or an event may be used. More specifically, if the folder F to which the image data sets S are input has the setting of hobby, the processed image data sets S1 generated from the image data sets S input to the folder F are sent to the image storing server, and stored in a folder classified as the hobby in the image storing server. The folders for classification need to be generated in advance in the image storing server.

Recently, a network photograph service system has been proposed. In a network photograph service system, an order for printing image data, writing image data in a CD-R, or printing image data on a T-shirt, or the like, is received via a network and the image data are printed or written in a CD-R. Printed matter or the CD-R generated in the above manner is then received at an agency designated at the time of placing the order, or delivered or mailed to a user. Therefore, processing for placing an order regarding the processed image data sets S1 may be related to the folder F.

In this case, a print size, a quantity, the time of delivery, a kind of printed matter to be generated, the agency for receiving the printed matter, an address in case of mailing, and the like are set in the initial setting window of the image processing daemon, regarding the folder F to which the image data sets S are input.

The image data sets S are subjected to the image processing according to the image processing parameters P calculated by the automatic set-up. At this time, the image processing is carried out after enlargement/reduction processing is carried out on the image data sets S according to the print size, and the processed image data sets S1 are obtained. However, the enlargement/reduction processing according to the print size may be carried out on the processed image data sets S1 by a print server that carries out printing in the network photograph service system, without the enlargement/reduction processing by the image processing daemon.

Recently, the number of pixels in an image data set obtained by a digital camera has been increased andhas become approximately double the number of pixels necessary for printing in an ordinary print size. For this reason, the image data sets S need to be reduced. An image rarely degrades with regard to quality, at the time of reducing image data representing the image. However, in the case of enlargement, image quality is highly likely to be degraded. Therefore, in the case where the images represented by the image data sets S need to be enlarged in accordance with the print size, the image processing daemon preferably displays a dialog box for warning. In this case, the image data sets S input to the folder F are stored therein so that the image data sets S can be corrected thereafter. Alternatively, a folder may be generated for storing the image data sets S that need to be examined. The image data sets S for which the warning was issued are moved to the folder. When the user displays the image data sets S for which the warning was issued, it is preferable for the user to confirm the content of the warning. In the case where the user wishes printing regardless of possible image quality degradation, the user may forcibly place an order in the network photograph service system.

In the case where processing for attaching the image processing parameters P to the image data sets S is related to the folder F, the image data sets S attached with the image processing parameters P are sent to the image storing server or the print server in the network photograph service system. In the case where the image data sets S attached with the image processing parameters P are sent to the print server in the network photograph service system, the image processing is carried out on the image data sets S according to the image processing parameters P to generate the processed image data sets S1. The processed image data sets S1 are then printed. At this time, the version of the automatic set-up by which the image processing parameters P were generated may be compared with the version of set-up processing carried out by the print server. If the former is older than the latter, the image processing parameters P are calculated again for the image data sets S by the print server, since the new version generates the processed images in higher quality. Therefore, the image processing is preferably carried out on the image data sets according to the newly-calculated image processing parameters P.

However, in the case where the image processing parameters P attached to the image data sets S were generated through correction by the manual set-up described above, the intension of the user by the manual set-up would not be reflected in the processed image data sets S1 if the image processing were carried out on the image data sets S according to the newly-calculated image processing parameters P. Therefore, in this case, the image processing parameters P are not newly generated and the image processing is carried out according to the image processing parameters P attached to the image data sets S.

In the above embodiment, the folder F is related to the processing for storing the processed image data sets S1 in the folder F1, for storing the processed image data sets S1 in the folder F1 according to the classification, for storing the processed image data sets S1 in the image storing server, or for placing the print order from the network photograph service system, in addition to the processing for calculating the image processing parameters P and for generating the processed image data sets S1 However, only the processing for calculating the image processing parameters P and for generating the processed image data sets S1 may be related to the folder F so that the user can determine how to deal with the processed image data sets S1 while using GUI after the image processing.

In this case, thumbnail images of the processed image data sets S1 may be displayed. Thereafter, the user selects the thumbnail images and designates how to deal with the selected images. On the contrary, the user may designate how to deal with the images first and then select the images to be dealt with. It is preferable for the selected thumbnail images to be distinguished from the others. For example, the selected thumbnail images may have colored frames, or brightness of the selected images may be increased to double the brightness of the others. Alternatively, the selected thumbnail images are displayed in color while the others are displayed in monochrome, or the selected thumbnail images are displayed normally while the thumbnail images of the others are screened with a pattern. Alternatively, the selected thumbnail images may be displayed larger than the others.

As shown in Figure 11, folders may be displayed according to how to deal with the images, in addition to the display of the thumbnail images. In this case, the thumbnail images are moved as desired from the thumbnail image display window to the folders by drag-and-drop operations so that how to deal with the processed image data sets can be determined.

In the above embodiment, the folder F may be related to processing for generating an index image or index images (hereinafter referred to as the index images) regarding the processed image data sets S1. Furthermore, a file may be stored in the folder F for instruction of index image data generation. In this manner, the user can obtain index image data sets regarding the image data sets S input to the folder F, without carrying out any operation. By printing the index image data sets, the user can obtain index prints.

In this case, the index image data sets can be obtained according to a desired specification, if the user sets in the initial setting window of the image processing daemon the number of images in each of the index image data sets (such as 20 images in an A4-size index image), a specification of thumbnail images (such as the size, and preference between inscription and circumscription), the size of the index images, a template for the index images, the number of images in vertical and horizontal sides of the index images, the file format of the index image data sets, and the file names thereof.

In the above embodiment, the processed image data sets S1m for monitor display and the processed image data sets S1p for printing are generated. However, the folder F may be related to processing for generating processed image data sets S1 representing images in predetermined sizes. The sizes are set in the initial setting window of the image processing daemon. For example, in the case where the size of the images represented by the image data sets S is 1800 × 1200 pixels, the processed image data sets S1 can be generated from the image data sets S input to the folder F, in the predetermined sizes such as a printing size (1536×1024 pixels), an e-mail attachment size (600 × 400 pixels), a size for Web page (such as 150 × 100 pixels), and a thumbnail size (60×40 pixels) if the processing related to the folder F is set for generating the processed image data sets S1 in the predetermined sizes.

Depending on the sizes, the aspect ratio of the images represented by the processed image data sets S1 may be different from the aspect ratio of the image data sets S. In this case, whether the images are inscribed (the images are included fully but white margins appear) or circumscribed (no white margin appears but the images are trimmed) can be selected according to the sizes.

The folder F may be related to the processing for generating the processed image data sets in the predetermined sizes, as has been described above. Alternatively, a file having description shown in Figure 12 may be stored in the folder F, for generating the processed image data sets S in the predetermined sizes.

In the case where the processed image data sets S1 are generated in the predetermined sizes, the file names are determined automatically. In this case, information representing the sizes is used for the file names of the image data sets S. For example, if the processed image data sets S1 are generated in the predetermined sizes for one of the image data sets S having the file name "Dsc00001.jpg", the file names of the processed image data sets S1 generated from the image data sets S become "Dsc00001_0_0.jpg (the same size as the image represented by the image data set S), "Dsc0001_1536_1024.jpg" (1536×1024 pixels), "Dsc0001_600_400.jpg" (600X400 pixels), "Dsc0001_150_100.jpg" (150 × 100 pixels), and "Dsc0001_60_40.jpg" (60 × 40 pixels). Alternatively, only the number of pixels in either side of the image may be used, such as "Dsc0001_1536.jpg" (the longer side) or "Dsc0001_1024.jpg" (the shorter side) . Alternatively, the file names may be shown in an abstract form, such as "Dsc0001_Size1.jpg", for example.

In the case where the processed image data sets S1 in the predetermined sizes are generated, instead of giving the file names to the image data sets in accordance with the sizes, folders having folder names corresponding to the sizes may be generated so that the processed image data sets S1 are stored under the same file names as the image data sets S, in the folders corresponding to the sizes.

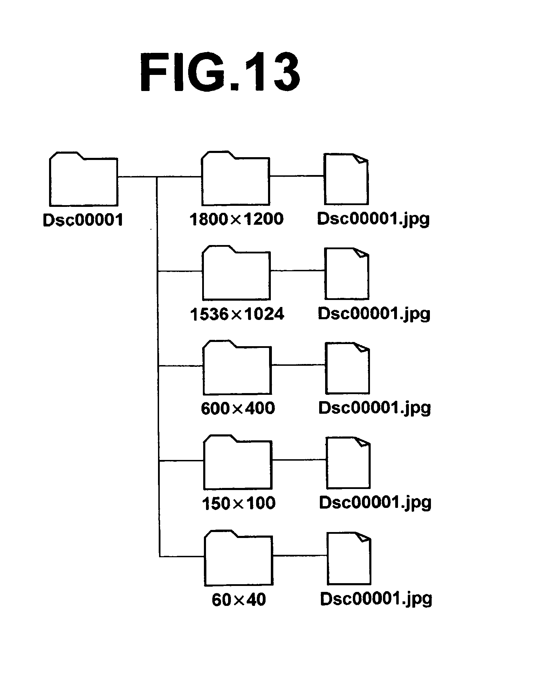

For example, if the processed image data sets S1 in the predetermined sizes are generated regarding the image data set S having the file name "Dsc00001.jpg", a folder having the folder name "Dsc00001" is generated, as shown in Figure 13. In the folder Dsc00001, folders having the folder names "1800X1200", "1536 × 1024", "600 × 400", "150 × 100", and "60 × 40" are generated. The processed image data sets S1 in the above-described sizes are respectively stored in the corresponding folders, under the name of "Dsc0001.jpg".

In this case, the file names of the processed image data sets S1 may reflect the number of pixels thereof, such as "Dsc00001_1536_1024.jpg". Alternatively, the number of pixels in either side may be used in the file names, such as "Dsc00001_1536.jpg" or "Dsc00001_1024.jpg".

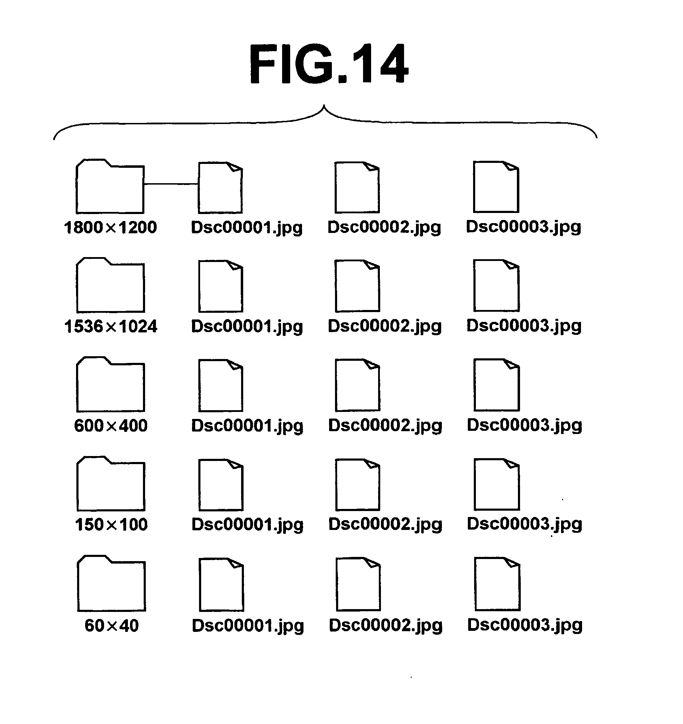

In this case, folders having the names "1800 × 1200", "1536 × 1024", "600 × 400", "150 × 100", and "60 × 40" may be generated, instead of generating the folder having the file name "Dsc00001". When the processed image data sets S1 are generated in the predetermined sizes from the image data sets S, the processed image data sets S1 having the same size are stored in the corresponding one of the folders, according to the size. For example, in the case where the processed image data sets S1 are generated in the predetermined sizes from the image data sets having the file names "Dsc00001.jpg", "Dsc00002.jpg" and "Dsc00003.jpg", the processed image data sets S1 having the file names "Dsc00001.jpg", "Dsc00002.jpg" and "Dsc00003.jpg" are stored in the respective folders corresponding to the sizes, as shown in Figure 14.

In the above embodiment, the folder F is related to the processing regarding the image data sets S, for calculating the image processing parameters P, for carrying out the image processing according to the image processing parameters P, and for storing the processed image data sets S1 in the folder F1. However, the folder F may be related to processing for sending the image data sets S to the image storing server, or for placing a print order with the network photograph service system, as has been described above.

A skilled artisan would know that computer readable media are not limited to any specific type of storage device and include any kind of device, including but not limited to CDs, floppy discs, RAMs, ROMs, hard discs, magnetic tapes, and internet downloads, in which computer instructions can be stored and/or transmitted. Transmission of the computer code through a network or through wireless transmission means is also within the scope of this invention. Additionally, computer code/instructions include, but are not limited to, source, object, and executable code and can be in any language including higher level languages, assembly language and machine language.

## Claims

1. An image processing method comprising the steps of:
detecting an input of image data (S) to a predetermined folder (F); and
carrying out predetermined processing related to the predetermined folder (F) on the image data in the background of an operating system, wherein
the predetermined processing comprises the step of calculating an image processing parameter used for carrying out image processing on the image data, **characterized in that**:
in the case where the image data are input to the predetermined folder as a plurality of image data sets, the predetermined processing further comprises the steps of:
extracting a similar subject image data group from the plurality of image data sets; and
calculating the image processing parameter used commonly for the similar subject image data group.

2. An image processing method as defined in Claim 1, wherein,
in the case where the image data are input to the predetermined folder as a plurality of image data sets, the predetermined processing further comprises the steps of:
extracting a bracket photography image data group from the plurality of image data sets; and
setting a fixed image processing parameter as the image processing parameter for the bracket photography image data group, instead of calculating the image processing parameter for the bracket photography image data group.

3. An image processing method comprising the steps of:
detecting an input of image data to a predetermined folder; and
carrying out predetermined processing related to the predetermined folder on the image data in the background of an operating system, wherein
the predetermined processing comprises the step of calculating an image processing parameter used for carrying out image processing on the image data, **characterized in that**:
in the case where the image data are input to the predetermined folder as a plurality of image data sets, the predetermined processing further comprises the steps of:
extracting a bracket photography image data group from the plurality of image data sets; and
setting a fixed image processing parameter as the image processing parameter for the bracket photography image data group, instead of calculating the image processing parameter for the bracket photography image data group.

4. An image processing method as defined in Claim 1 or 3, wherein the predetermined processing further comprises the step of attaching the image processing parameter to the image data.

5. An image processing method as defined in Claim 1 or 3, wherein the predetermined processing further comprises the step of generating processed image data by carrying out the image processing on the image data according to the image processing parameter.

6. An image processing method as defined in Claim 5, wherein the predetermined processing further comprises the step of displaying the processed image data together with the image data.

7. An image processing method as defined in Claim 6, wherein the predetermined processing further comprises the steps of:
receiving an input of correction instruction for the processed image data; and
newly calculating the image processing parameter according to the correction instruction.

8. An image processing method as defined in Claim 1 or 3, further comprising the step of:
judging whether or not the image processing has been carried out on the image data; and
wherein the predetermined processing is the step of calculating the image processing parameter only for the image data on which the image processing has not been carried out.

9. An image processing method as defined in Claim 1 or 3, further comprising the step of:
judging whether or not the image data are protected from alteration by copyright information; and
wherein the predetermined processing is the step of calculating the image processing parameter only for the image data other than the image data whose alteration is prohibited by the copyright information.

10. An image processing apparatus comprising:
detection means for detecting an input of image data (S) to a predetermined folder (F); and
processing means (1) for carrying out predetermined processing related to the predetermined folder on the image data in the background of an operating system, wherein the processing means (1) carries out processing comprising the step of calculating an image processing parameter used for image processing on the image data, as the predetermined processing, **characterized in that** :
in the case where the image data (S) are input to the predetermined folder as a plurality of image data sets, the processing means (1) further carries out processing, as the predetermined processing, comprising the steps of:
extracting a similar subject image data group from the plurality of image data sets; and
calculating the image processing parameter used commonly for the similar subject image data group.

11. An image processing apparatus as defined in Claim 10, , wherein, in the case where the image data are input to the predetermined folder as a plurality of image data sets, the processing means further carries out processing, as the predetermined processing, comprising the steps of:
extracting a bracket photography image data group from the plurality of image data sets; and
setting a fixed image processing parameter as the image processing parameter for the bracket photography image data group, instead of calculating the image processing parameter for the bracket photography image data group.

12. An image processing apparatus comprising:
detection means for detecting an input of image data (S) to a predetermined folder (F); and
processingmeans (1) for carrying out predeterminedprocessing related to the predetermined folder on the image data in the background of an of operating system, wherein the processing means (1) carries out processing comprising the step of calculating an image processing parameter used for image processing on the image data, as the predetermined processing, **characterized in that**.
in the case where the image data are input to
the predetermined folder as a plurality of image data sets, the processing means further carries out processing, as the predetermined processing, comprising the steps of:
extracting a bracket photography image data group from the plurality of image data sets; and
setting a fixed image processing parameter as the image processing parameter for the bracket photography image data group, instead of calculating the image processing parameter for the bracket photography image data group.

13. An image processing apparatus as defined in Claim 10 or 12, wherein the processing means further carries out processing comprising the step of attaching the image processing parameter to the image data, as the predetermined processing.

14. An image processing apparatus as defined in Claim 10 or 12, wherein the processing means further carries out processing, as the predetermined processing, comprising the step of generating processed image data by carrying out the image processing on the image data according to the image processing parameter.

15. An image processing apparatus as defined in Claim 14, wherein the processing means further carrying out processing comprising the step of displaying the processed image data together with the image data, as the predetermined processing.

16. An image processing apparatus as defined in Claim 15, wherein the processing means further carries out processing, as the predetermined processing, comprising the steps of:
receiving an input of correction instruction for the processed image data; and
newly calculating the image processing parameter based on the correction instruction.

17. An image processing apparatus as defined in Claim 10 or 12, wherein the processing means further carries out processing comprising the step of judging whether or not the image processing has been carried out on the image data, and carries out the processing of calculating the image processing parameter only for the image data on which the image processing has not been carried out.

18. An image processing apparatus as defined in Claim 10 or 12, wherein the processing means further carries out processing comprising the step of judging whether or not the image data are protected from alteration by copyright information, and carries out the processing of calculating the image processing parameter only for the image data excluding the image data whose alteration is prohibited by the copyright information.

19. A program that causes a computer to execute the steps of:
detecting an input of image data to a predetermined folder; and
carrying out predetermined processing related to the predetermined folder on the image data in the background of an operating system, wherein
the step of carrying out the predetermined processing is the step of calculating an image processing parameter used for carrying out image processing on the image data, **characterized in that**:
in the case where the image data are input to the predetermined folder as a plurality of image data sets, the step of carrying out the predetermined processing further comprises the steps of:
extracting a similar subject image data group from the plurality of image data sets; and
calculating the image processing parameter used commonly
for the similar subject image data group.

20. A program as defined in Claim 19 wherein,
in the case where the image data are input to the predetermined folder as a plurality of image data sets, the step of carrying out the predetermined processing further comprises the steps of:
extracting a bracket photography image data group from the plurality of image data sets; and
setting a fixed image processing parameter as the image processing parameter for the bracket photography image data group, instead of calculating the image processing parameter for the bracket photography image data group.

21. A program that causes a computer to execute the steps of :
detecting an input of image data to a predetermined folder;
and
carrying out predetermined processing related to the predetermined folder on the image data in the background of an operating system,
wherein the step of carrying out the predetermined processing is the step of calculating an image processing parameter used for carrying out image processing on the image data, **characterized in that**:
in the case where the image data are input to the predetermined folder as a plurality of image data sets, the step of carrying out the predetermined processing further comprises the steps of:
extracting a bracket photography image data group from the plurality of image data sets; and
setting a fixed image processing parameter as the image processing parameter for the bracket photography image data group, instead of calculating the image processing parameter for the bracket photography image data group.

22. A program as defined in Claim 19 or 21, wherein the step of carrying out the predetermined processing further comprises the step of attaching the image processing parameter to the image data.

23. A program as defined in Claim 19 or 21, wherein the step of carrying out the predetermined processing further comprises the step of generating processed image data by carrying out the image processing on the image data according to the image processing parameter.

24. A program as defined in Claim 23, wherein the step of carrying out the predetermined processing further comprises the step of displaying the processed image data together with the image data.

25. A program as defined in Claim 24, wherein the step of carrying out the predetermined processing further comprises the steps of:
receiving an input of correction instruction for the processed image data; and
newly calculating the image processing parameter according to the correction instruction.

26. A program as defined in Claim 19 or 21, further comprising the step of:
judging whether or not the image processing has been carried out on the image data; and
wherein the predetermined processing is the step of calculating the image processing parameter only for the image data on which the image processing has not been carried out.

27. A program as defined in Claim 19 or 21, further comprising the step of:
judging whether or not the image data are protected from alteration by copyright information; and
wherein the step of carrying out the predetermined processing is the step of calculating the image processing parameter only for the image data other than the image data whose alteration is prohibited by the copyright information.

28. A computer-readable recording medium storing the program as defined in any of claims 19 to 27.

## Patentansprüche

1. Bildverarbeitungsverfahren, umfassend folgende Schritte:
Nachweisen der Eingabe von Bilddaten (S) in einen vorbestimmten Ordner (F); und
Ausführen einer vorbestimmten Verarbeitung in Bezug auf den vorbestimmten Ordner (F) bezüglich der Bilddaten im Hintergrund eines Betriebssystems, wobei
die vorbestimmte Verarbeitung den Schritt des Berechnens eines Bildverarbeitungsparameters beinhaltet, welcher verwendet wird zum Durchführen der Bildverarbeitung bezüglich der Bilddaten, **dadurch gekennzeichnet, dass**
für den Fall, dass die Bilddaten in den vorbestimmten Ordner in Form einer Mehrzahl von Bilddatenmengen eingegeben werden, die vorbestimmte Verarbeitung außerdem den Schritt aufweist:
Extrahieren einer Bilddatengruppe mit ähnlichem Gegenstand aus den mehreren Bilddatenmengen; und
Berechnen des Bildverarbeitungsparameters, der gemeinsam für die Bilddatengruppe ähnlichen Gegenstands verwendet wird.

2. Bildverarbeitungsverfahren nach Anspruch 1, bei dem
für den Fall, dass die Bilddaten in den vorbestimmten Ordner als eine Mehrzahl von Bilddatenmengen eingegeben werden, die vorbestimmte Verarbeitung weiterhin folgende Schritte aufweist:
Extrahieren einer Bracket-Fotografie-Bilddatengruppe aus den mehreren Bilddatenmengen; und
Einstellen eines fixen Bildverarbeitungsparameters als den Bildverarbeitungsparameter für die Bracket-Fotografie-Bilddatengruppe anstelle des Berechnens des Bildverarbeitungsparameters für die Bracket-Fotografie-Bilddatengruppe.

3. Bildverarbeitungsverfahren, umfassend die Schritte:
Nachweisen der Eingabe von Bilddaten in einen vorbestimmten Ordner; und
Durchführen einer vorbestimmten Bildverarbeitung in Bezug auf den vorbestimmten Ordner für die Bilddaten im Hintergrund eines Betriebssystems, wobei die vorbestimmte Verarbeitung den Schritt des Berechnens eines Bildverarbeitungsparameters beinhaltet, der zum Ausführen der Bildverarbeitung bezüglich der Bilddaten verwendet wird, **dadurch gekennzeichnet, dass**
für den Fall, dass die Bilddaten in den vorbestimmten Ordner in Form einer Mehrzahl von Bilddatenmengen eingegeben werden, die vorbestimmte Verarbeitung außerdem die Schritte aufweist:
Extrahieren einer Bracket-Fotografie-Bilddatengruppe aus den mehreren Bilddatenmengen; und
Einstellen eines fixen Bildverarbeitungsparameters als Bildverarbeitungsparameter für die Bracket-Fotografie-Bilddatengruppe anstelle des Berechnens des Bildverarbeitungsparameters für die Bracket-Fotografie-Bilddatengruppe.

4. Bildverarbeitungsverfahren nach Anspruch 3, bei dem die vorbestimmte Verarbeitung weiterhin den Schritt des Anhängens des Bildverarbeitungsparameters an die Bilddaten umfasst.

5. Bildverarbeitungsverfahren nach Anspruch 1 oder 3, bei dem die vorbestimmte Verarbeitung weiterhin den Schritt des Erzeugens verarbeiteter Bilddaten durch Ausführen der Bildverarbeitung bezüglich der Bilddaten gemäß dem Bildverarbeitungsparameter umfasst.

6. Bildverarbeitungsverfahren nach Anspruch 5, bei dem die vorbestimmte Verarbeitung weiterhin den Schritt des Anzeigens der verarbeiteten Bilddaten zusammen mit den Bilddaten umfasst.

7. Bildverarbeitungsverfahren nach Anspruch 6, bei dem die vorbestimmte Verarbeitung weiterhin folgende Schritte aufweist:
Empfangen einer Eingabe eines Korrekturbefehls für die verarbeiteten Bilddaten; und
neuerliches Berechnen des Bilddatenparameters gemäß dem Korrekturbefehl.

8. Bildverarbeitungsverfahren nach Anspruch 1 oder 3, weiterhin umfassend den Schritt:
Beurteilen, ob die Bildverarbeitung bezüglich der Bilddaten durchgeführt wurde oder nicht; und
wobei die vorbestimmte Verarbeitung der Schritt des Berechnens des Bildverarbeitungsparameters lediglich für diejenigen Bilddaten ist, für die die Bildverarbeitung nicht durchgeführt wurde.

9. Bildverarbeitungsverfahren nach Anspruch 1 oder 3, weiterhin umfassend den Schritt:
Beurteilen, ob die Bilddaten vor einer Änderung durch Copyright-Information geschützt sind oder nicht; und
wobei die vorbestimmte Verarbeitung der Schritt des Berechnens des Bildverarbeitungsparameters nur für die Bilddaten außer den Bilddaten ist, deren Änderung durch Copyright-Information gesperrt ist.

10. Bildverarbeitungsvorrichtung, umfassend:
eine Nachweiseinrichtung zum Nachweisen einer Eingabe von Bilddaten (S) in einen vorbestimmten Ordner (F); und
eine Verarbeitungseinrichtung (1) zum Durchführen einer vorbestimmten Verarbeitung bezüglich des vorbestimmten Ordners für die Bilddaten in dem Hintergrund eines Betriebssystems, wobei die Verarbeitungseinrichtung (1) die Verarbeitung ausführt, welche den Schritt des Berechnens eines Bildverarbeitungsparameters beinhaltet, der für die Bildverarbeitung als die vorbestimmte Verarbeitung an den Bilddaten durchgeführt wird, **dadurch gekennzeichnet, dass** in dem Fall, dass die Bilddaten in den vorbestimmten Ordner in Form mehrerer Bilddatenmengen eingegeben werden, die Verarbeitungseinrichtung (1) außerdem als die vorbestimmte Verarbeitung eine Verarbeitung mit folgenden Schritten ausführt:
Extrahieren einer Bilddatengruppe ähnlichen Gegenstands aus den mehreren Bilddatenmengen; und
Berechnen des Bildverarbeitungsparameters, der gemeinsam für die Bilddatengruppe ähnlichen Gegenstands verwendet wird.

11. Bildverarbeitungsvorrichtung nach Anspruch 10, bei der für den Fall, dass die Bilddaten in den vorbestimmten Ordner in Form mehrerer Bilddatenmengen eingegeben werden, die Verarbeitungseinrichtung außerdem als die vorbestimmte Verarbeitung eine Verarbeitung mit folgenden Schritten durchführt:
Extrahieren einer Bracket-Fotografie-Bilddatengruppe aus den mehreren Bilddatenmengen; und
Einstellen eines fixen Bildverarbeitungsparameters als den Bildverarbeitungsparameter für die Bracket-Fotografie-Bilddatengruppe anstelle des Berechnens des Bildverarbeitungsparameters für die Bracket-Fotografie-Bilddatengruppe.

12. Bildverarbeitungsvorrichtung, umfassend:
eine Nachweiseinrichtung zum Nachweisen einer Eingabe von Bilddaten (S) in einen vorbestimmten Ordner (F); und
eine Verarbeitungseinrichtung (1) zum Durchführen einer vorbestimmten Verarbeitung bezüglich des vorbestimmten Ordners für die Bilddaten in dem Hintergrund eines Betriebssystems, wobei die Verarbeitungseinrichtung (1) die Verarbeitung ausführt, welche den Schritt des Berechnens eines Bildverarbeitungsparameters beinhaltet, der für die Bildverarbeitung als die vorbestimmte Verarbeitung an den Bilddaten durchgeführt wird, **dadurch gekennzeichnet, dass** für den Fall, dass die Bilddaten in den vorbestimmten Ordner als mehrere Bilddatenmengen eingegeben werden, die Verarbeitungseinrichtung als die vorbestimmte Verarbeitung eine Verarbeitung mit folgenden Schritten ausführt:
Extrahieren einer Bracket-Fotografie-Bilddatengruppe aus den mehreren Bilddatenmengen; und
Einstellen eines fixen Bildverarbeitungsparameters als den Bildverarbeitungsparameter für die Bracket-Fotografie-Bilddatengruppe anstelle des Berechnens des Bildverarbeitungsparameters für die Bracket-Fotografie-Bilddatengruppe.

13. Bildverarbeitungsvorrichtung nach Anspruch 10 oder 12, bei der die Verarbeitungseinrichtung weiterhin eine Verarbeitung ausführt, welche den Schritt des Anhängens des Bildverarbeitungsparameters an die Bilddaten als die vorbestimmte Verarbeitung ausführt.

14. Bildverarbeitungsvorrichtung nach Anspruch 10 oder 12, bei der die Verarbeitungseinrichtung außerdem als die vorbestimmte Verarbeitung eine Verarbeitung ausführt, welche den Schritt des Erzeugens verarbeiteter Bilddaten durch Ausführen der Bildverarbeitung an den Bilddaten gemäß dem Bildverarbeitungsparameter umfasst.

15. Bildverarbeitungsvorrichtung nach Anspruch 14, bei der die Verarbeitungseinrichtung außerdem eine Verarbeitung ausführt, welche den Schritt des Anzeigens der verarbeiteten Bilddaten gemeinsam mit den Bilddaten als die vorbestimmte Verarbeitung umfasst.

16. Bildverarbeitungsvorrichtung nach Anspruch 15, bei der die Verarbeitungseinrichtung außerdem als die vorbestimmte Verarbeitung die Verarbeitung mit folgenden Schritten umfasst:
Empfangen einer Eingabe eines Korrekturbefehls für die verarbeiteten Bilddaten; und
neuerliches Berechnen des Bildverarbeitungsparameters basierend auf dem Korrekturbefehl.

17. Bildverarbeitungsvorrichtung nach Anspruch 10 oder 12, bei der die Verarbeitungseinrichtung außerdem eine Verarbeitung ausführt, welche den Schritt des Beurteilens beinhaltet, ob die Bildverarbeitung bezüglich der Bilddaten durchgeführt wurde oder nicht, und die Verarbeitung des Berechnens des Bildverarbeitungsparameters nur für diejenigen Bilddaten durchführt, für die eine Bildverarbeitung nicht durchgeführt wurde.

18. Bildverarbeitungsvorrichtung nach Anspruch 10 oder 12, bei der die Verarbeitungseinrichtung außerdem eine Verarbeitung ausführt, welche den Schritt des Beurteilens beinhaltet, ob die Bilddaten durch Copyright-Information vor Änderung geschützt sind, und die Verarbeitung der Berechnung des Bildverarbeitungsparameters nur für solche Bilddaten ausführt, welche die Bilddaten ausschließt, deren Änderung durch die Copyright-Information gesperrt ist.

19. Programm, welches einen Computer veranlasst, folgende Schritte auszuführen:
Nachweisen einer Eingabe von Bilddaten in einen vorbestimmten Ordner; und
Ausführen einer vorbestimmten Verarbeitung bezüglich des vorbestimmten Ordners bezüglich der Bilddaten in dem Hintergrund eines Betriebssystems,
wobei der Schritt des Ausführens der vorbestimmten Verarbeitung der Schritt des Berechnens eines Bildverarbeitungsparameters ist, der zum Ausführen der Bildverarbeitung der Bilddaten verwendet wird, **dadurch gekennzeichnet, dass**
für den Fall, dass die Bilddaten in den vorbestimmten Ordner in Form einer Mehrzahl von Bilddatenmengen eingegeben werden, die vorbestimmte Verarbeitung außerdem den Schritt aufweist:
Extrahieren einer Bilddatengruppe mit ähnlichem Gegenstand aus den mehreren Bilddatenmengen; und
Berechnen des Bildverarbeitungsparameters, der gemeinsam für die Bilddatengruppe ähnlichen Gegenstands verwendet wird.

20. Programm nach Anspruch 19, bei dem
für den Fall, dass die Bilddaten in den vorbestimmten Ordner als eine Mehrzahl von Bilddatenmengen eingegeben werden, die vorbestimmte Verarbeitung weiterhin folgende Schritte aufweist:
Extrahieren einer Bracket-Fotografie-Bilddatengruppe aus den mehreren Bilddatenmengen; und
Einstellen eines fixen Bildverarbeitungsparameters als den Bildverarbeitungsparameter für die Bracket-Fotografie-Bilddatengruppe anstelle des Berechnens des Bildverarbeitungsparameters für die Bracket-Fotografie-Bilddatengruppe.

21. Programm, welches einen Computer veranlasst, folgende Schritte auszuführen:
Nachweisen der Eingabe von Bilddaten in einen vorbestimmten Ordner; und
Durchführen einer vorbestimmten Bildverarbeitung in Bezug auf den vorbestimmten Ordner für die Bilddaten im Hintergrund eines Betriebssystems, wobei die vorbestimmte Verarbeitung den Schritt des Berechnens eines Bildverarbeitungsparameters beinhaltet, der zum Ausführen der Bildverarbeitung bezüglich der Bilddaten verwendet wird, **dadurch gekennzeichnet, dass**
für den Fall, dass die Bilddaten in den vorbestimmten Ordner in Form einer Mehrzahl von Bilddatenmengen eingegeben werden, die vorbestimmte Verarbeitung außerdem die Schritte aufweist:
Extrahieren einer Bracket-Fotografie-Bilddatengruppe aus den mehreren Bilddatenmengen; und
Einstellen eines fixen Bildverarbeitungsparameters als Bildverarbeitungsparameter für die Bracket-Fotografie-Bilddatengruppe anstelle des Berechnens des Bildverarbeitungsparameters für die Bracket-Fotografie-Bilddatengruppe.

22. Programm nach Anspruch 19 oder 21, bei dem die vorbestimmte Verarbeitung weiterhin den Schritt des Anhängens des Bildverarbeitungsparameters an die Bilddaten umfasst.

23. Programm nach Anspruch 19 oder 21, bei dem die vorbestimmte Verarbeitung weiterhin den Schritt des Erzeugens verarbeiteter Bilddaten durch Ausführen der Bildverarbeitung bezüglich der Bilddaten gemäß dem Bildverarbeitungsparameter umfasst.

24. Programm nach Anspruch 23, bei dem die vorbestimmte Verarbeitung weiterhin den Schritt des Anzeigens der verarbeiteten Bilddaten zusammen mit den Bilddaten umfasst.

25. Programm nach Anspruch 24, bei dem die vorbestimmte Verarbeitung weiterhin folgende Schritte aufweist:
Empfangen einer Eingabe eines Korrekturbefehls für die verarbeiteten Bilddaten; und
neuerliches Berechnen des Bilddatenparameters gemäß dem Korrekturbefehl.

26. Programm nach Anspruch 19 oder 21, weiterhin umfassend den Schritt:
Beurteilen, ob die Bildverarbeitung bezüglich der Bilddaten durchgeführt wurde oder nicht; und
wobei die vorbestimmte Verarbeitung der Schritt des Berechnens des Bildverarbeitungsparameters lediglich für diejenigen Bilddaten ist, für die die Bildverarbeitung nicht durchgeführt wurde.

27. Programm nach Anspruch 19 oder 21, weiterhin umfassend den Schritt:
Beurteilen, ob die Bilddaten vor einer Änderung durch Copyright-Information geschützt sind oder nicht; und
wobei die vorbestimmte Verarbeitung der Schritt des Berechnens des Bildverarbeitungsparameters nur für die Bilddaten außer den Bilddaten ist, deren Änderung durch Copyright-Information gesperrt ist.

28. Computerlesbarer Aufzeichnungsträger, der das Programm nach einem der Ansprüche 17 bis 27 speichert.

## Revendications

1. Procédé de traitement d'image comprenant les étapes consistant à :
détecter une entrée de données d'image (S) dans un dossier prédéterminé (F) ; et
effectuer un traitement prédéterminé lié au dossier prédéterminé (F) sur les données d'image à l'arrière-plan d'un système d'exploitation, où le traitement prédéterminé comprend l'étape consistant à calculer un paramètre de traitement d'image utilisé pour effectuer un traitement d'image sur les données d'image, **caractérisé en ce que** :
dans le cas où les données d'image sont entrées dans le dossier prédéterminé comme une pluralité d'ensembles de données d'image, le traitement prédéterminé comprend en outre les étapes consistant à :
extraire un groupe de données d'image de sujet similaire de la pluralité d'ensembles de données d'image ; et
calculer le paramètre de traitement d'image utilisé de façon commune pour le groupe de données d'image de sujet similaire.

2. Procédé de traitement d'image selon la revendication 1, dans lequel,
dans le cas où les données d'image sont entrées dans le dossier prédéterminé comme une pluralité d'ensembles de données d'image, le traitement prédéterminé comprend en outre les étapes consistant à :
extraire un groupe de données d'image de photographie à prise de vue en fourchette de la pluralité d'ensembles de données d'image ; et
établir un paramètre de traitement d'image fixe comme le paramètre de traitement d'image pour le groupe de données d'image de photographie à prise de vue en fourchette, au lieu de calculer le paramètre de traitement d'image pour le groupe de données d'image de photographie à prise de vue en fourchette.

3. Procédé de traitement d'image comprenant les étapes consistant à :
détecter une entrée de données d'image dans un dossier prédéterminé ; et
effectuer un traitement prédéterminé lié au dossier prédéterminé sur les données d'image à l'arrière-plan d'un système d'exploitation, où le traitement prédéterminé comprend l'étape consistant à calculer un paramètre de traitement d'image utilisé pour effectuer un traitement d'image sur les données d'image, **caractérisé en ce que** :
dans le cas où les données d'image sont entrées dans le dossier prédéterminé comme une pluralité d'ensembles de données d'image, le traitement prédéterminé comprend en outre les étapes consistant à :
extraire un groupe de données d'image de photographie à prise de vue en fourchette de la pluralité d'ensembles de données d'image ; et
établir un paramètre de traitement d'image fixe comme le paramètre de traitement d'image pour le groupe de données d'image de photographie à prise de vue en fourchette, au lieu de calculer le paramètre de traitement d'image pour le groupe de données d'image de photographie à prise de vue en fourchette.

4. Procédé de traitement d'image selon la revendication 1 ou 3, dans lequel le traitement prédéterminé comprend en outre l'étape consistant à joindre le paramètre de traitement d'image aux données d'image.

5. Procédé de traitement d'image selon la revendication 1 ou 3, dans lequel le traitement prédéterminé comprend en outre l'étape consistant à générer des données d'image traitées en effectuant le traitement d'image sur les données d'image selon le paramètre de traitement d'image.

6. Procédé de traitement d'image selon la revendication 5, dans lequel le traitement prédéterminé comprend en outre l'étape consistant à afficher les données d'image traitées conjointement avec les données d'image.

7. Procédé de traitement d'image selon la revendication 6, dans lequel le traitement prédéterminé comprend en outre les étapes consistant à :
recevoir une entrée d'instruction de correction pour les données d'image traitées ; et
calculer à nouveau le paramètre de traitement d'image selon l'instruction de correction.

8. Procédé de traitement d'image selon la revendication 1 ou 3, comprenant en outre l'étape consistant à :
juger si le traitement d'image a été effectué ou non sur les données d'image ; et
dans lequel le traitement prédéterminé est l'étape consistant à calculer le paramètre de traitement d'image uniquement pour les données d'image sur lesquelles le traitement d'image n'a pas été effectué.

9. Procédé de traitement d'image selon la revendication 1 ou 3, comprenant en outre l'étape consistant à :
juger si les données d'image sont protégées ou non de la modification par des informations de droit d'auteur ; et
dans lequel le traitement prédéterminé est l'étape consistant à calculer le paramètre de traitement d'image uniquement pour les données d'image autres que les données d'image dont la modification est empêchée par les informations de droit d'auteur.

10. Appareil de traitement d'image comprenant :
des moyens de détection pour détecter une entrée de données d'image (S) dans un dossier prédéterminé (F) ; et
des moyens de traitement (1) pour effectuer un traitement prédéterminé lié au dossier prédéterminé sur les données d'image à l'arrière-plan d'un système d'exploitation, où les moyen de traitement (1) effectuent un traitement comprenant l'étape consistant à calculer un paramètre de traitement d'image utilisé pour un traitement d'image sur les données d'image, comme le traitement prédéterminé, **caractérisé en ce que** :
dans le cas où les données d'image (S) sont entrées dans le dossier prédéterminé comme une pluralité d'ensembles de données d'image, les moyens de traitement (1) effectuent en outre un traitement, comme le traitement prédéterminé, comprenant les étapes consistant à :
extraire un groupe de données d'image de sujet similaire de la pluralité d'ensembles de données d'image ; et
calculer le paramètre de traitement d'image utilisé de façon commune pour le groupe de données d'image de sujet similaire.

11. Appareil de traitement d'image selon la revendication 10, dans lequel, dans le cas où les données d'image sont entrées dans le dossier prédéterminé comme une pluralité d'ensembles de données d'image, les moyens de traitement effectuent en outre un traitement, comme le traitement prédéterminé, comprenant les étapes consistant à :
extraire un groupe de données d'image de photographie à prise de vue en fourchette de la pluralité d'ensembles de données d'image ; et
établir un paramètre de traitement d'image fixe comme le paramètre de traitement d'image pour le groupe de données d'image de photographie à prise de vue en fourchette, au lieu de calculer le paramètre de traitement d'image pour le groupe de données d'image de photographie à prise de vue en fourchette.

12. Appareil de traitement d'image comprenant :
des moyens de détection pour détecter une entrée de données d'image (S) dans un dossier prédéterminé (F) ; et
des moyens de traitement (1) pour effectuer un traitement prédéterminé lié au dossier prédéterminé sur les données d'image à l'arrière-plan d'un système d'exploitation, où les moyens de traitement (1) effectuent un traitement comprenant l'étape consistant à calculer un paramètre de traitement d'image utilisé pour un traitement d'image sur les données d'image, comme le traitement prédéterminé, **caractérisé en ce que** :
dans le cas où les données d'image sont entrées dans le dossier prédéterminé comme une pluralité d'ensembles de données d'image, les moyens de traitement effectuent en outre un traitement, comme le traitement prédéterminé, comprenant les étapes consistant à :
extraire un groupe de données d'image de photographie à prise de vue en fourchette de la pluralité d'ensembles de données d'image ; et
établir un paramètre de traitement d'image fixe comme le paramètre de traitement d'image pour le groupe de données d'image de photographie à prise de vue en fourchette, au lieu de calculer le paramètre de traitement d'image pour le groupe de données d'image de photographie à prise de vue en fourchette.

13. Appareil de traitement d'image selon la revendication 10 ou 12, dans lequel les moyens de traitement effectuent en outre un traitement comprenant l'étape consistant à joindre le paramètre de traitement d'image aux données d'image, comme le traitement prédéterminé.

14. Appareil de traitement d'image selon la revendication 10 ou 12, dans lequel les moyens de traitement effectuent en outre un traitement, comme le traitement prédéterminé, comprenant l'étape consistant à générer des données d'image traitées en effectuant le traitement d'image sur les données d'image selon le paramètre de traitement d'image.

15. Appareil de traitement d'image selon la revendication 14, dans lequel les moyens de traitement effectuent en outre un traitement comprenant l'étape consistant à afficher les données d'image traitées conjointement avec les données d'image, comme le traitement prédéterminé.

16. Appareil de traitement d'image selon la revendication 15, dans lequel les moyens de traitement effectuent en outre un traitement, comme le traitement prédéterminé, comprenant les étapes consistant à :
recevoir une entrée d'instruction de correction pour les données d'image traitées ; et
calculer à nouveau le paramètre de traitement d'image sur la base de l'instruction de correction.

17. Appareil de traitement d'image selon la revendication 10 ou 12, dans lequel les moyens de traitement effectuent en outre un traitement comprenant en outre l'étape consistant à juger si le traitement d'image a été effectué ou non sur les données d'image, et effectuent le traitement consistant à calculer le paramètre de traitement d'image uniquement pour les données d'image sur lesquelles le traitement d'image n'a pas été effectué.

18. Appareil de traitement d'image selon la revendication 10 ou 12, dans lequel les moyens de traitement effectuent en outre un traitement comprenant l'étape consistant à juger si les données d'image sont protégées ou non de la modification par des informations de droit d'auteur, et effectuent le traitement consistant à calculer le paramètre de traitement d'image uniquement pour les données d'image à l'exclusion des données d'image dont la modification est empêchée par les informations de droit d'auteur.

19. Programme qui amène un ordinateur à exécuter les étapes consistant à :
détecter une entrée de données d'image dans un dossier prédéterminé ; et
effectuer un traitement prédéterminé lié au dossier prédéterminé sur les données d'image à l'arrière-plan d'un système d'exploitation, où l'étape consistant à effectuer le traitement prédéterminé est l'étape consistant à calculer un paramètre de traitement d'image utilisé pour effectuer un traitement d'image sur les données d'image, **caractérisé en ce que** :
dans le cas où les données d'image sont entrées dans le dossier prédéterminé comme une pluralité d'ensembles de données d'image, l'étape consistant à effectuer le traitement prédéterminé comprend en outre les étapes consistant à :
extraire un groupe de données d'image de sujet similaire de la pluralité d'ensembles de données d'image ; et
calculer le paramètre de traitement d'image utilisé de façon commune pour le groupe de données d'image de sujet similaire.

20. Programme selon la revendication 19, dans lequel, dans le cas où les données d'image sont entrées dans le dossier prédéterminé comme une pluralité d'ensembles de données d'image, l'étape consistant à effectuer le traitement prédéterminé comprend en outre les étapes consistant à :
extraire un groupe de données d'image de photographie à prise de vue en fourchette de la pluralité d'ensembles de données d'image ; et
établir un paramètre de traitement d'image fixe comme le paramètre de traitement d'image pour le groupe de données d'image de photographie à prise de vue en fourchette, au lieu de calculer le paramètre de traitement d'image pour le groupe de données d'image de photographie à prise de vue en fourchette.

21. Programme qui amène un ordinateur à exécuter les étapes consistant à :
détecter une entrée de données d'image dans un dossier prédéterminé ; et
effectuer un traitement prédéterminé lié au dossier prédéterminé sur les données d'image à l'arrière-plan d'un système d'exploitation, où l'étape consistant à effectuer le traitement prédéterminé est l'étape consistant à calculer un paramètre de traitement d'image utilisé pour effectuer un traitement d'image sur les données d'image, **caractérisé en ce que** :
dans le cas où les données d'image sont entrées dans le dossier prédéterminé comme une pluralité d'ensembles de données d'image, l'étape consistant à effectuer le traitement prédéterminé comprend en outre les étapes consistant à :
extraire un groupe de données d'image de photographie à prise de vue en fourchette de la pluralité d'ensembles de données d'image ; et
établir un paramètre de traitement d'image fixe comme le paramètre de traitement d'image pour le groupe de données d'image de photographie à prise de vue en fourchette, au lieu de calculer le paramètre de traitement d'image pour le groupe de données d'image de photographie à prise de vue en fourchette.

22. Programme selon la revendication 19 ou 21, dans lequel l'étape consistant à effectuer le traitement prédéterminé comprend en outre l'étape consistant à joindre le paramètre de traitement d'image aux données d'image.

23. Programme selon la revendication 19 ou 21, dans lequel l'étape consistant à effectuer le traitement prédéterminé comprend en outre l'étape consistant à générer des données d'image traitées en effectuant le traitement d'image sur les données d'image selon le paramètre de traitement d'image.

24. Programme selon la revendication 23, dans lequel l'étape consistant à effectuer le traitement prédéterminé comprend en outre l'étape consistant à afficher les données d'image traitées conjointement avec les données d'image.

25. Programme selon la revendication 24, dans lequel l'étape consistant à effectuer le traitement prédéterminé comprend en outre les étapes consistant à :
recevoir une entrée d'instruction de correction pour les données d'image traitées ; et
calculer à nouveau le paramètre de traitement d'image selon l'instruction de correction.

26. Programme selon la revendication 19 ou 21, comprenant en outre l'étape consistant à :
juger si le traitement d'image a été effectué ou non sur les données d'image ; et
dans lequel le traitement prédéterminé est l'étape consistant à calculer le paramètre de traitement d'image uniquement pour les données d'image sur lesquelles le traitement d'image n'a pas été effectué.

27. Programme selon la revendication 19 ou 21, comprenant en outre l'étape consistant à :
juger si les données d'image sont protégées ou non de la modification par des informations de droit d'auteur ; et
dans lequel l'étape consistant à effectuer le traitement prédéterminé est l'étape consistant à calculer le paramètre de traitement d'image uniquement pour les données d'image autres que les données d'image dont la modification est empêchée par les informations de droit d'auteur.

28. Support d'enregistrement lisible par ordinateur stockant le programme selon l'une quelconque des revendications 19 à 27.
